# EUROPÄISCHE PATENTSCHRIFT

(11) **EP 2 523 810 B1**
(45) Veröffentlichungstag und Bekanntmachung des Hinweises auf die Patenterteilung: **02.10.2013**
(21) Anmeldenummer: 10768718.8
(22) Anmeldetag: 11.10.2010
(51) Int. Cl.: B41F 13/20, B41F 13/28, F16C 23/10

(54) **VORRICHTUNGEN ZUR LAGERUNG EINES ODER MEHRERER ZYLINDER EINER DRUCKMASCHINE**
DEVICE FOR BEARING ONE OR MORE CYLINDERS OF A PRINTING PRESS
DISPOSITIFS DE SUPPORT D'UN OU DE PLUSIEURS CYLINDRES D'UNE MACHINE À IMPRIMER

(30) Priorität: 14.01.2010 DE 102010000891; 22.06.2010 DE 102010030331
(43) Veröffentlichungstag der Anmeldung: 21.11.2012
(73) Patentinhaber: Koenig & Bauer Aktiengesellschaft, 97080 Würzburg (DE)
(72) Erfinder: LIEBLER, Manfred, Herrmann, 97837 Erlenbach (DE)
(86) Internationale Anmeldenummer: PCT/EP2010/065168
(87) Internationale Veröffentlichungsnummer: WO 2011/085831

(56) Entgegenhaltungen:
- EP-A2- 1 543 964
- DE-A1-102006 054 380

## Beschreibung

Die Erfindung betrifft Druckeinheiten einer Druckmaschine mit stirnseitigen Seitengestellen gemäß dem Oberbegriff des Anspruches 1 bzw. 5.

Durch die EP 1 923 214 A2 ist eine Druckeinheit bekannt, wobei Form- und Übertragungszylinder wenigstens paarweise in einem gemeinsamen Einsatz gelagert sind, welcher seinerseits in eine hierzu ausgebildete Öffnung des Seitengestells einsetzbar ist. Der Übertragungszylinder ist hierbei in einem Radiallager gelagert, welches zur Ermöglichung einer An-Abstell-Bewegung in einem Exzenterlager angeordnet ist. Die Lageranordnung aus Radial- und Exzenterlager sind in einem Bereich des Einsatzes vorgesehen, welcher aus einer Gestellflucht des Seitengestells zur Seite der Zylinder hin herausragt.

Die EP 1 990 192 A2 offenbart eine Lagerung eines Zylinders einer Rotationsdruckmaschine, wobei zur Vermeidung von thermisch bedingten Spannungen in einer Ausführung das einen Zylinderzapfen aufnehmende Radiallager in einem Bereich des Lagers vorgesehen ist, welcher aus einer Gestellflucht des Seitengestells zur Seite der Zylinder hin herausragt. Ein eine An-/Abstellbewegung ermöglichende Exzenterlagerung soll sich hierbei mit dem Radiallager in axialer Richtung nicht überschneiden und ist in der Gestellflucht angeordnet.

Auch die EP 1 232 062 B1 offenbart ein einen Zylinderzapfen aufnehmendes Radiallager, welches exzentrisch in einem Bereich einer im Gestell angeordneten Lagerbuchse vorgesehen ist, der aus einer Gestellflucht des Seitengestells zur Seite der Zylinder hin herausragt.

Die DD 55 482 A1 betrifft eine Klemmbefestigung eines Wälzlagers in einem Gehäuse. Das Wälzlager soll durch das Klemmen fest in im Gehäuse befestigt werden, wobei Toleranzmaße in Gehäusebohrung und Außenmaß überbrückt werden sollen. Hierzu wird das Wälzlager bzw. dessen Außenring durch zwischen Gehäuse und Lageraußenring angeordnete Keile geklemmt. Die keilförmigen Abschnitte befinden sich hierbei auf Höhe des Gestells und auf Höhe des Wälzlagers.

Durch die DE 10 2007 001 920 A1 ist eine Wälzlagereinrichtung für Spindeln, insbesondere Motorspindeln bekannt, wobei sich die Lageraußenringe zweier axial beabstandeter Radiallager in einer Hülse abstützen. Der Lageraußenring eines der beiden Lager stützt sich über eine federbelastete Keilverbindung in der Hülse ab. Die Wälzlager werden somit unter radialer Vorspannung betrieben.

Die DE 10 2007 001 918 A1 betrifft ein unter radialer Vorspannung betriebenes Wälzlager, wobei sich der Außenring über eine federbelastete Keilverbindung in einem Gehäuse abstützt.

Durch die DE 10 2008 000 204 A1 sind verschiedene Konzepte für die Lagerung eines Druckwerkszylinders einer Druckmaschine offenbart, welche die Gefahr von durch Erwärmung von Lagern entstehender Lagerschäden vermindern will. Unter Anderem offenbart sie in einer Ausführung eine Vorrichtung zur Lagerung eines Zylinders in einem Seitengestell, wobei ein Innenring eines Radiallagers zur Aufnahme eines Zapfens des Zylinders vorgesehen ist, welcher über Wälzkörper in einem Zwischenring gelagert ist, der seinerseits über Wälzelemente in einem Außenring gelagert ist. Um eine Druck-An/Ab-Stellbewegung zu ermöglichen, ist der Innenring exzentrisch bzgl. der Umfangslinie des Zwischenrings angeordnet. Damit sich das Radiallager bei Erwärmung ungehindert ausdehnen kann, ist es in einem Bereich des Zwischenringes angeordnet, welcher aus einer Gestellflucht des Seitengestells zur Seite des Zylinders hin herausragt. Die Lagerung zwischen Außen- und Zwischenring ist hierzu axial versetzt in der Gestellflucht angeordnet, damit sich das Radiallager bei Erwärmung ausdehnen kann, ohne durch den Außenring eingespannt zu sein.

Die nachveröffentlichte WO 2011/157463 A1 offenbart eine Lagerung eines Hauptzylinders von Druckmaschinen, wobei das den Zapfen aufnehmende Radiallager und das Nadellager des Exzenterlagers in einer Flucht angeordnet sind, die außerhalb der Gestellflucht auf der zylindernahen Seite des Gestells liegt.

Der Erfindung liegt die Aufgabe zugrunde, Druckeinheiten einer Druckmaschine mit stirnseitigen Seitengestellen zu schaffen.

Die Aufgabe wird erfindungsgemäß durch die Merkmale des Anspruches 1 bzw. 5 gelöst.

Die mit der Erfindung erzielbaren Vorteile bestehen insbesondere darin, dass eine möglichst spielfreie, jedoch verschleißarme Lagerung mit hoher Steifigkeit geschaffen wird.

Diese ist in einfacher Weise herstellbar und ermöglicht eine gute Justierung zusammenwirkende Druckwerkszylinder.

Die Verlagerung des Radiallagers aus dem Wirkbereich der Verspannung im Gestell, insbesondere aus der Flucht des Gestells, in welchem die Lagervorrichtung verspannt ist, ermöglicht ein spielfreies Verspannen mit hohen Kräften ohne Auswirkung auf schädliche Lagerkräfte.

Für den Fall des bzgl. seiner Rotationsachse verschwenkbaren Lagers ist es z. B. im Zusammenhang mit einer Lagerung eines Zylinders, welcher bzgl. einer Möglichkeit zur An-/Abstellung bewegbar gelagert sein soll, vorteilhaft, die Anordnung eines entsprechenden Schwenklagers, insbesondere einer Exzentereinrichtung, ebenfalls in einem Bereich außerhalb der Gestellfluch - insbesondere auf der zylindernahen Seite - vorzusehen. Die axiale Lage von Schwenk- und Radiallager sind vorzugsweise derart gewählt, dass deren Stützbereiche eine selbe senkrecht zur Achse stehende Ebene zumindest schneiden.

Dies alles ermöglicht eine steife Verspannung eines Lagergehäuses (z. B. eines äußeren Lagerrings) in einer Gestellwand, ohne die Lagermittel der Exzentereinrichtung unnötig stark zu belasten. Auch werden mögliche Kippmomente vermeiden, welche ein axialer Versatz von Radial- und Schwenklager ggf. bewirken könnte.

Für die Ausführung, wobei zumindest das den Zapfen rotierbar aufnehmende Radiallager im Bereich außerhalb der Gestellflucht zum Zylinder hin vorgesehen ist, kann in Weiterbildung eine Befestigung der gesamten Lageranordnung im Gestell durch Verspannen der Lageranordnung in Gestellbohrungen über eine in Art eines Spannringsatzes ausgebildete Vorrichtung erfolgen. Ein Verspannen kann hier ohne Änderung der Lagerluft bzw. Lagerspannung erfolgen. Weiterführend kann auch für den Fall eines zusätzlichen, Stellbewegungen bewirkenden Lagers dieses ebenfalls außerhalb der Gestellflucht angeordnet sein.

Ausführungsbeispiele der Erfindung sind in den Zeichnungen dargestellt und werden im Folgenden näher beschrieben.

Es zeigen:

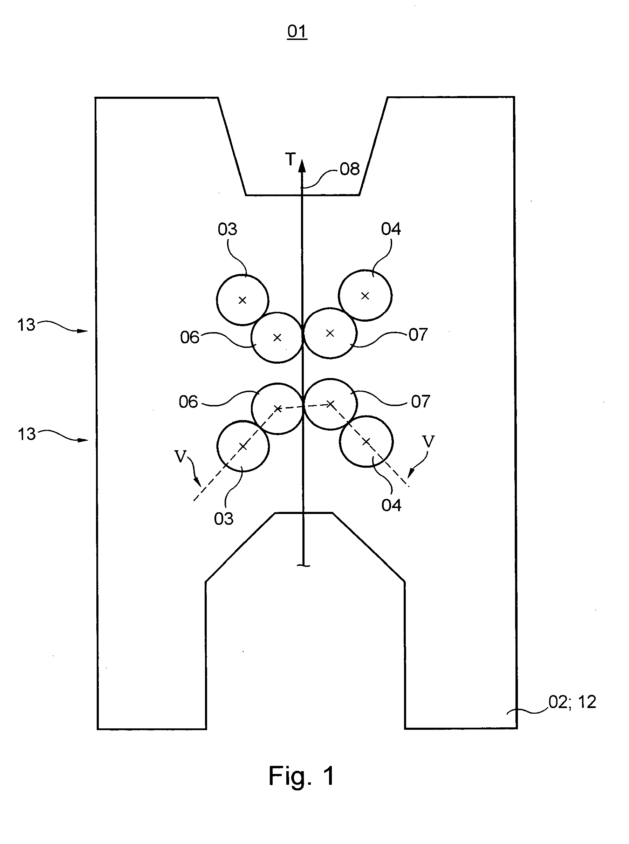

- Fig. 1: eine schematische Darstellung einer Druckeinheit;
- Fig. 2: einen Querschnitt durch eine Lagervorrichtung mit Exzenterlager;
- Fig. 3: eine Seitenansicht einer im Seitengestell angeordneten Lagervorrichtung mit angedeuteten verdeckten Kanten aus Fig. 2;
- Fig. 4: einen Schnitt entlang einer in Fig. 1 angedeuteten Schnittlinie V-V durch die Lagerung eines Doppeldruckwerks;
- Fig. 5: einen Querschnitt durch eine Lagervorrichtung mit Exzenterlager in einer zweiten Ausführung;
- Fig. 6: eine auseinander gezogen dargestellte Detailansicht aus Fig. 5;
- Fig. 7: eine Seitenansicht einer im Seitengestell angeordneten Lagervorrichtung einer zweiten Ausführung mit angedeuteten verdeckten Kanten aus Fig. 5;
- Fig. 8: einen Schnitt entlang einer in Fig. 1 angedeuteten Schnittlinie V - V durch die Lagerung eines Doppeldruckwerks in zweiter Ausführung;
- Fig. 9: eine Innenansicht der Lagervorrichtungen des Doppeldruckwerks mit exemplarisch für einen der Übertragungszylinder dargestellten Stellmitteln;
- Fig. 10: eine Außenansicht der Lagervorrichtungen des Doppeldruckwerks mit exemplarisch für einen der Übertragungszylinder dargestelltem Stellantrieb.

In einer im Übrigen hier nicht näher dargestellten Druckeinheit 01 einer Druckmaschine, beispielsweise einer Rollenrotationsdruckmaschine, insbesondere einer Rollenrotationsoffsetdruckmaschine, sind an stirnseitigen Seitengestellen 02; 12 der Druckmaschine Zylinder 03; 04; 06; 07, insbesondere Druckwerkszylinder 03; 04; 06; 07; in Lagervorrichtungen 09; 11 abgestützt und um ihre jeweilige Achse drehbar gelagert.

Im Falle des Ausführungsbeispiels sind die Zylinder 03; 04 als Formzylinder 03; 04 und die Zylinder 06; 07 als Übertragungszylinder 06; 07 eines Doppeldruckwerks 13 ausgebildet. Das Doppeldruckwerk 13 kann in ebener Ausführung, d. h. mit in Druck-An in einer gemeinsamen Ebene angeordneten Rotationsachsen der vier Zylinder 03; 04; 06; 07, als n-Druckwerk wie das mit 13 bezeichnete untere Doppeldruckwerk 13, oder als u-Druckwerk wie das obere Doppeldruckwerk 13 ausgebildet sein. Die Druckeinheit 01 kann mehrere Doppeldruckwerke 13, insbesondere zwei Doppeldruckwerke 13 aufweisen. Im Falle des Ausführungsbeispiels sind die Druckwerkszylinder 03; 04; 06; 07 in einer in etwa u- und einer in etwa n-förmigen Konstellation zur Ausbildung jeweils einer Brückendruckeinheit 13 angeordnet, wobei die beiden Brückendruckeinheiten 13 übereinander liegend angeordnet sind und zusammen eine sog. H-Druckeinheit 01 definieren. Die Übertragungszylinder 06; 07 eines Doppeldruckwerks 13 sind im Druckbetrieb zum beidseitigen Bedrucken einer Bedruckstoffbahn 08 (kurz Bahn 08), die die Druckeinheit 01 z. B. in Transportrichtung T von unten nach oben durchläuft, aneinander angestellt.

Die Formzylinder 03; 04 können als Plattenzylinder und die Übertragungszylinder 06; 07 als Gummizylinder ausgebildet sein. Die Übertragungszylinder 06; 07 bilden im Falle des hier beschriebenen Ausführungsbeispiels wechselseitig Gegendruckzylinder. Grundsätzlich könnte die Druckeinheit 01 auch als Satellitendruckeinheit ausgebildet sein, wobei zwei oder gar vier Übertragungszylinder über die Bahn 08 an einen Satellitenzylinder anstellbar sind. Allgemein ist die Druckeinheit 01 vorzugsweise als Druckeinheit 01 mit mehreren übereinander angeordneten, auf eine selbe Bahnseite druckenden Druckwerken ausgebildet und/oder weist einen Bahnlauf mit einem Eintritt von unten und einem Austritt oben auf. Die Druckeinheit 01 kann auch aus gestapelten "Unter-Einheiten" gebildet sein, wie sie beispielsweise einzelne gestapelte Brückendruckeinheiten 13 mit jeweils eigenen Seitengestellteilen darstellen könnten.

Dem jeweiligen Formzylinder 03; 04 sind (nicht näher dargestellte) periphere Einheiten, insbesondere jeweils ein Farbwerk und ggf. ein Feuchtwerk, zugeordnet.

Je Zylinderpaar aus Form- und Übertragungszylinder 03; 04; 06; 07 ist zumindest einer der Zylinder 03; 04; 06; 07 in einer Richtung mit einer zu seiner Längsachse senkrechten Komponente (d. h. in einer radialen Richtung) in entsprechend ausgebildeten Lagervorrichtungen 09; 11 derart bewegbar angeordnet, dass er mittels die Stellbewegung ermöglichenden Lager 19, z. B. Lagermitteln 19 an einen in Druck-An zusammen wirkenden Zylinder 03; 04; 06; 07 an, bzw. von diesem abstellbar ist. Das die Stellbewegung ermöglichende Lager 19 kann allgemein ein Schwenklager 19, insbesondere ein Exenterlager 19 sein. Vorzugsweise ist dies zumindest der Übertragungszylinder 06; 07 des jeweiligen Druckwerks, wobei Druckwerk z. B. die auf eine Bahnseite eine Farbe aufbringende Einheit aus Form- und Übertragungszylinder sowie Farbwerk und ggf. Feuchtwerk und ggf. sonstige diesem Zylinderpaar zugeordnete periphere Funktionseinheiten meint. Im hier vorliegenden Doppeldruckwerk 13 ist zumindest einer der Übertragungszylinder 06; 07, vorzugsweise sind jedoch beide Übertragungszylinder 06; 07 der Brückendruckeinheit 13 über die ihnen zugeordneten, entsprechend mit die Stellbewegung ermöglichenden Lagermitteln 19 ausgebildeten Lagervorrichtungen 11 zumindest zwischen einer Druck-An-Position, in der sie an der Bedruckstoffbahn 08 bzw. dem jeweils gegenüberliegenden Übertragungszylinder 06; 07 anliegen, und einer Druck-Ab-Position, in der sie von der Bedruckstoffbahn 08 bzw. dem jeweils gegenüberliegenden Übertragungszylinder 07; 06 abgestellt sind, beweglich am Seitengestell 02; 12 gelagert.

Im Falle einer bevorzugten Ausführungsform der Erfindung sind sämtliche Formzylinder 03; 04 der Druckeinheit 01, z. B. H-Druckeinheit 01, bzgl. ihrer jeweiligen radialen Lage bezüglich des Seitengestells 02; 12 fest in den ihnen zugeordneten Lagervorrichtungen 09 angeordnet, d. h. es ist keinerlei A-/Abstellmechanismus der Formzylinder 03; 04 in einer radialen Richtung senkrecht zu ihrer Achse vorgesehen (außer ggf. lediglich Einstellmittel zu Justagezwecken), während z. B. sämtliche Übertragungszylinder 06; 07 bzgl. ihrer Achslage radial verstellbar angeordnet sind, d. h., in den entsprechend ausgebildeten, die Stellbewegung ermöglichende Lagermittel 19, z. B. ein Schwenklager 19, vorzugsweise ein Exzenterlager 19, aufweisenden Lagervorrichtungen 11 in radialer Richtung stellbar gelagert sind.

Eine bevorzugte Ausgestaltung einer stirnseitigen Lagervorrichtung 09; 11, welche zumindest die Drehbewegung des zugeordneten Zylinders 03; 04; 06; 07 aufnimmt, wird im folgenden an einer vorteilhaften Ausführung beschrieben, welche für den Fall eines in o. g. Weise radial zu stellenden Zylinders 03; 04; 06; 07 zusätzlich auch die die Stellbewegung ermöglichenden Lagermitteln 19 beinhaltet.

Dem Zylinder 03; 04; 06; 07 ist jeweils stirnseitig eine Lagervorrichtung 09; 11 zugeordnet, durch welche ein Zapfen 14; 16 des betreffenden Zylinders 03; 04; 06; 07 gegenüber den gestellfesten Lagerteilen drehbar aufgenommen ist. Hierzu weist die Lagervorrichtung 09; 11 ein den Zapfen 14; 16 aufnehmendes Lager 17, beispielsweise ein Radiallager 17, z. B. ein als Wälzlager 17 ausgebildetes Radiallager 17, auf, welches mittelbar oder unmittelbar von einem äußeren Ring 23, z. B. äußerem Lagerring 23 oder Außenring 23, aufgenommen ist. Die Lagervorrichtung 09; 11 ist in einer insbesondere kreisförmigen Öffnung 18, z. B. Bohrung 18, des Seitengestells 02; 12 angeordnet. Insbesondere ist jedem Zylinder 03; 04; 06; 07 je Stirnseite eine eigene Lagervorrichtung 09; 11, insbesondere in einer eigenen Bohrung 18 des Seitengestells 02; 12 eingesetzt, vorgesehen. Zur passgenauen und/oder spielfreien Anordnung der Lagervorrichtung 09; 11 im Seitengestell 02; 12 wirkt im montierten Zustand eine (insbesondere zylindrische) Außenumfangsfläche 21 der Lagervorrichtung 09; 11 mit der (insbesondere zylindrischen) Innenumfangsfläche 22 der Bohrung 18 zusammen. Für den Fall eines als Gussteil gefertigten Seitengestells 02; 12 ist die Innenumfangsfläche 22 vorzugsweise oberflächenbearbeitet, z. B. mittels einer CNC-Fräsmaschine mit hoher Genauigkeit bzgl. der Rundheit und/oder glatten und gradfreien Oberfläche, ausgebildet. Vorzugsweise bilden Innenumfangsfläche 22 der Bohrung 18 und Außenumfangsfläche 21 des (im Bereich der Gestellflucht ggf. radial mehrteiligen) Außenrings 23 einen Passsitz.

Eine Möglichkeit für ein passgenaues und/oder spielfreie Einsetzen der Lagervorrichtung 09; 11 in die Seitengestelle 02; 12 erfolgt beispielsweise durch die Ausnutzung thermischer Effekte, indem z. B. die Lagervorrichtung 09; 11 bzw. ein Teil, z. B. ein äußerster Ring 23 (z. B. unten genanntem Außenring 23) der einzusetzenden Lagervorrichtung 09; 11, des Lagers mit dem exakt selben Durchmesser oder mit geringfügigem Übermaß gegenüber der Bohrung 18 hergestellt, anschließend unterhalb Raumtemperatur abgekühlt (geschrumpft), und schließlich in diesem Zustand in die Bohrung 18 eingesetzt wird. Durch Erwärmen (bzw. erwärmen lassen) auf Umgebungs- bzw. Raumtemperatur erfolgt das nun spielfreie Fixieren, ggf. unter Verspannung im Fall des Übermaßes, der Lagervorrichtung 09; 11 (bzw. dessen äußersten Rings 23) in der Bohrung 18. Zur Unterstützung einer Demontage und/oder eines beabsichtigten Verdrehens des Außenrings 23 in der Bohrung 18 können vorzugsweise Ölkanäle in den Abstützbereich zwischen Bohrung 18 und äußersten Ring 23 münden, sodass beispielsweise durch Aufbringen eines hohen Öldruckes eine beabsichtigte Relativbewegung vereinfacht. In nicht dargestellter Ausführung kann der Außenring 23 auch ohne in die Bohrung 18 eingeschrumpft zu sein mit oder ohne Passung in der Bohrung 18 angeordnet sein, wobei der Außenring 23 dann beispielsweise mittels eines kragenförmigen Flansches fest an der Gestellaußenseite verschraubt sein kann.

Die Lagervorrichtung 09; 11 weist einen äußeren Ring 23, z. B. Außenring 23, insbesondere Lageraußenring 23 auf, welcher mittelbar oder unmittelbar das Radiallager 17 aufnimmt. Dieser Außenring 23 kann in alternativer Ausführung im Bereich der Gestellflucht von einem weiteren Ring umfasst und z. B. mit diesem verdrehfest und spielfrei verbunden sein, wobei dieser äußere Ring dann z. B. mit der Wandung der Bohrung 18 in genannter Weise spielfrei stützend zusammen wirkt. In dieser Ausführung ist der Außenring 23 hinsichtlich seines radialen Aufbaus mehrteilig ausgebildet, wobei jedoch das unten genannte auf diese Ausführung zu übertragen ist. In der radial mehrteiligen Ausführung des Außenrings 23 kann beispielsweise die Befestigung am Seitengestell 02; 12 durch den äußeren, und die Anordnung von Lagerflächen eines Schwenk- oder Radiallagers im inneren des mehrteiligen Außenrings 23 vorgesehen sein. Besonders bauraumsparend und daher vorzuziehen ist jedoch die Ausführung des Außenringes 23 derart, dass er auf einer Außenfläche, z. B. der Außenumfangsfläche 21 mit der Gestellbohrung, z. B. der Bohrung 18, zusammenwirkt und auf einer Innenfläche gleichzeitig eine Gleit- oder Rollfläche für ein Schwenk- oder Radiallager bereitstellt (s.u.).

Zur Fixierung des Außenrings 23 ist ein sich auf der äußeren Gestellseite 02.2; 12.2, abstützender, z. B. im wesentlichen koaxial zur Bohrung 18 anzuordnender Ring 29 in der Art eines Kragens 29 vorgesehen, welcher mit dem Außenring 23 einteilig hergestellt, mit letzterem stoffschlüssig, z. B. durch Schweißen, oder wie dargestellt durch Schrauben 28 verbunden sein kann. Dieser Ring 29 ist lösbar, z. B. mittels Schrauben 37, mit dem Seitengestell 02; 12, insbesondere an der äußeren Gestellseite 02.2; 12.2, verbunden bzw. verbindbar. Hierdurch ist die in die Bohrung 18 eingefügte Lagervorrichtung 09; 11 fixierbar. Für den Fall eines mehrteiligen Außenrings 23 kann die Verschraubung zwischen Kragen 29 und Außenring 23 im äußeren Teilring erfolgen.

Der Außenring 23 ist somit Bestandteile einer das Wälzlager 17 unmittelbar oder mittelbar tragenden Halterung oder es bildet umgekehrt der Ringe 23 der Lagervorrichtung 09; 11, insbesondere der Lageraußenring 23, gleichzeitig einen Teil einer Halterung, welcher in einteiliger Ausführung direkt in der Öffnung 18 eingepasst und ggf. zusätzlich durch Schrauben 37 und einen Kragen 29 fixiert ist bzw. wird.

Hierunter soll auch eine in der Weise mehrteilige Ausführung des Lageraußenrings 23 verstanden werden, wobei dieser mehrteilige "Lageraußenring" 23 dann z. B. in axialer Richtung mehrere miteinander fest verbundene Teile aufweisen kann. Z. B. ist ein das Radiallager 17 mittelbar oder unmittelbar tragender, und aus der Gestellflucht herausragender Teil 32 mit einem in der Gestellflucht anzuordnenden Teil (z. B. in der Art einer Verlängerung) fest, jedoch ggf. lösbar, verbunden, z. B. verschraubt.

In vorteilhafter und dargestellter Ausführung stützt sich das Radiallager 17 mittelbar oder unmittelbar am Innenumfang eines zum Zylinder 03; 04; 06; 07 hin aus der Gestellflucht herausragenden Teils 32 eines entsprechend verlängerten Außenrings 23 ab. Dieser aus der Gestellflucht herausragende, das Radiallager 17 mittel- oder unmittelbar abstützende Teil 32 kann ein Abschnitt eines einstückigen, entsprechend länger ausgebildeten Außenrings 23 (wie dargestellt), oder wie oben bereits erwähnt, ein Teil 32 eines in axialer Richtung mehrteiligen Außenrings 23 (d. h. fest verbundene Teile) sein.

In der Ausführung der Lagervorrichtung 09 für einen Zylinder 03; 04; 06; 07, welcher nicht in radialer Richtung an- bzw. abstellbar gelagert sein muss bzw. ist, ist das Radiallager 17 bzw. dessen äußerer Laufring direkt und/oder mittelbar an einem aus der Gestellflucht herausragenden Teils 32 des Außenrings 23, insbesondere direkt oder über einen Zwischenring durch den Innenumfang des aus der Gestellflucht herausragenden Teils 32 des Außenrings 23 aufgenommen und abgestützt; d. h. es liegt außerhalb der Gestellflucht auf der dem Zylinder 03; 04; 06; 07 näheren Seite des Seitengestells 02; 12. Die innere Lauffläche des Radiallagers 17 ist am Außenumfang eines Innenrings 27 vorgesehen, dessen Innenumfang den Zapfen 14; 16 aufnimmt.

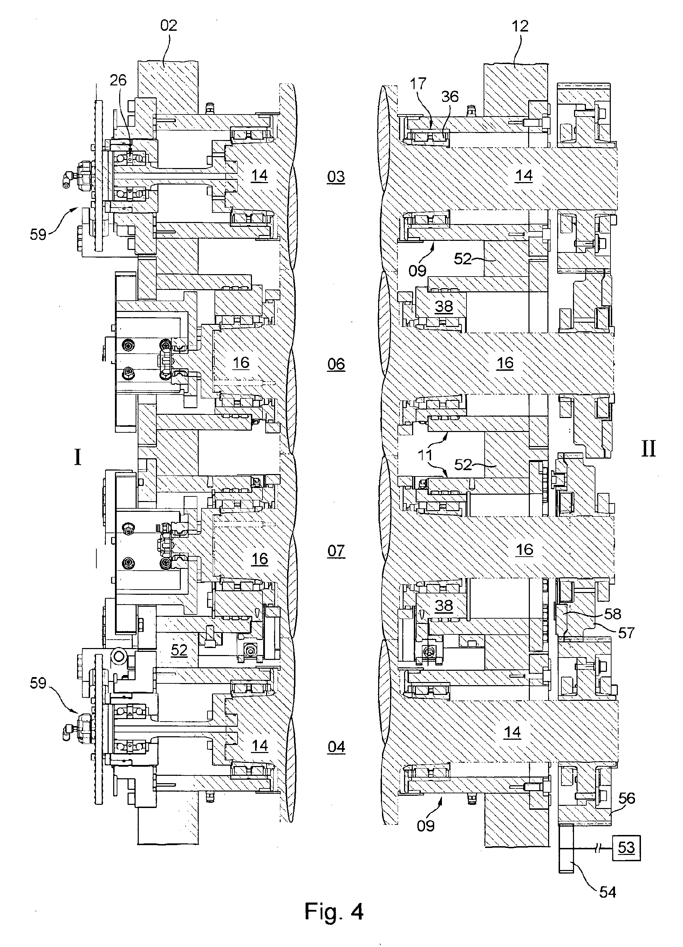

Bei vorteilhaftem Vorliegen von in axialer Richtung betrachtet nebeneinander mehreren den Zapfen 14; 16 abstützenden Radiallagern 17 oder einem Radiallager 17 mit mehreren axial voneinander beabstandeten umlaufenden Spuren von Wälzkörpern 36 (im dargestellten Beispiel derer zwei), ist mindestens eines der Radiallager 17 oder wenigstens eine zylindernächste Wälzkörperspur, vorteilhaft mehrere oder vorzugsweise gar sämtliche, z. B. hier beide, Radiallager 17 bzw. Spuren, in einem außerhalb der Gestellflucht liegenden Bereich der Lagervorrichtung 09; 11 bzw. des Rings 23 angeordnet (siehe z. B. Lagervorrichtung 09 eines Formzylinders 03; 04 in Fig. 4).

In dieser Ausführung der Lagervorrichtung 09; 11 ist eine besonders steife und spielfreie Lagerung des betreffenden Zylinders 03; 04; 06; 07 geschaffen, welche einfach herstellbar und vor allem vor Ort in einfacher Weise montierbar ist. Durch die nach Innen gezogene Anordnung der bzw. des Radiallagers 17 ist zum einen eine hohe thermische Verspannung in der Öffnung ohne Auswirkung auf die Wälzlagervorspannung möglich und zum zweiten ein Abstand des zylindernächsten Aufpunktes zur Stirnseite des Zylinders 03; 04; 06; 07 verkürzt. Zum dritten führen durch Betrieb resultierende thermisch bedingte Querschnittsänderungen des Wälzlagers 17 und ggf. wälzlagernaher Bauteile nicht zu unzulässigen Verspannungen in den Lagerelementen und damit einhergehenden erhöhten Verschleiß.

In bevorzugter Weiterbildung der Lagervorrichtung 11 für einen Zylinder 03; 04; 06; 07, welcher in radialer Richtung an- bzw. abstellbar gelagert sein soll bzw. ist, hier beispielsweise ein Übertragungszylinder 06; 07, ist zwischen dem Radiallager 17 bzw. zwischen einen Satz mehrerer den Zapfen 14; 16 aufnehmender Radiallager 17 oder Wälzkörperspuren und dem Außenring 23 das die Stellbewegung ermöglichende Lagermittel 19, z. B. ein als Exzenterlager 19 ausgebildetes Schwenklager mit wenigstens einem exzentrischen Ring 38, z. B. Zwischenring 38, insbesondere Exzenterring 38, angeordnet. Das Radiallager 17 ist (bzw. die Radiallager 17 sind) mit seiner (bzw. ihren) Rotationsachse R exzentrisch (Exzentrizität e) zu einer Schwenkachse S des Rings 38 in letzterem angeordnet. Insbesondere ist das Radiallager 17 bzw. sind die Radiallager 17 mittelbar oder unmittelbar in einer exzentrisch angeordneten Öffnung des Rings 38 angeordnet. Das Maß der Exzentrizität e ("Stellexzenter") liegt hier z. B. im Bereich von 10 und 25 mm, vorteilhaft von 12 und 20 mm. Der Zwischenring 38 ist zwischen dem Radiallager 17 und dem Außenring 23, insbesondere dem letztlich mit dem Radiallager 17 hierbei mittelbar über den Zwischenring 38 verbundenen Ring 23 angeordnet. Im dargestellten Ausführungsbeispiel ist dies der aus der Gestellflucht zur Zylinderseite heraus gezogene Außenring 23. Der Exzenterring 38 ist am oder in dem diesen tragenden Ring 23 mittelbar oder unmittelbar verschwenkbar gelagert. Hierzu ist zwischen der Halterung, d. h. dem betreffenden Ring 23 und dem Exzenterring 38 ein Lager 39 vorgesehen, welches in einfacherer Ausführung ein Gleitlager, in vorteilhafter Ausführung jedoch ein Wälzlager 39 sein kann. Die innere Lauffläche für die Wälzkörper 41 des Exzenterlagers 19 bzw. dessen Wälzlager 39 und die äußere Lauffläche für die Wälzkörper 36 des Radiallagers 17 können grundsätzlich Bestandteil zweier eigener, miteinander z. B. drehfest und spielfrei verbundener Ringe sein. Vorteilhaft ist jedoch die Ausführung eines das Radial- und das Exzenterlager 17; 19 beinhaltenden Dreiringlagers, wobei ein mittlerer Ring, hier der Exzenterring 38, auf seinem Außenumfang die Lauffläche des Exzenterlagers 19 bzw. dessen Wälzlagers 39 und auf seinem Innenumfang die Lauffläche des Radiallagers 17 aufweist.

Vorzugsweise ist eine Ausführung der die Stellbewegung ermöglichende Lagervorrichtung 11 derart, dass das Exzenterlager 19 bzw. dessen zylindernächster Laufring direkt oder mittelbar an einem aus der Gestellflucht herausragenden Teils 32 des Außenrings 23 (bzw. entsprechend axial verlängerten mehrteiligen Außenrings), aufgenommen und abgestützt ist; d. h. es liegt ebenfalls außerhalb der Gestellflucht auf der dem Zylinder 03; 04; 06; 07 näheren Seite des Seitengestells 02; 12. In einer bevorzugten Ausführung liegen somit sowohl das Radiallager 17 als auch das Exzenterlager 19 in einem Bereich der Halterung 23, 24 außerhalb der Gestellflucht auf der zylindernäheren Seite.

Von besonderem Vorteil ist die relative Anordnung von Radial- und Exzenterlager 17; 19, wobei die axiale Lage von Exzenterlager 19 und Radiallager 17 derart gewählt sind, dass deren Stützbereiche L17; L19, d. h. der axiale Längsabschnitt L19, in welchem radiale Kräfte aufnehmende Wälzkörper 41 oder Gleitflächen des Exzenterlagers 19 vorgesehen sind, und der axiale Längsabschnitt L17, in welchem radiale Kräfte aufnehmende Wälzkörper 36 des Radiallagers 17 vorgesehen sind, eine selbe senkrecht zur axialen Richtung stehende Ebene zumindest schneiden. Die Stützbereiche L17; 19 liegen in dieser Ausführung nicht axial voneinander beabstandet, sondern überschneiden sich zumindest hinsichtlich ihrer axialen Lage. Für die Ausführung der Lagervorrichtung 09 ohne Schwenklager 19 wird der Stützbereich L17 durch die Wälzkörper 36 gebildet, welche dann an einer entsprechenden Lauffläche des Außenrings 23 (ohne Zwischenring) abrollen.

In einer bevorzugten Ausführung ist der Außenring 23 auf zumindest einem Abschnitt des aus der Gestellflucht zylinderseitig herausragenden Teils 32, welcher den Stützbereich L17; L19 auf seiner Innenseite aufweist, in radialer Richtung einteilig ausgebildet, d. h. er besteht nicht auf einem die Lauffläche bzw. Gleitfläche aufweisenden inneren und einem diesen inneren Teil aufnehmenden und tragenden äußeren Teil. Eine Außenumfangsfläche 34 des Außenrings 23 wird hier zumindest in diesem Längsabschnitt L17; L19 durch das selbe Bauteil gebildet, welches auf der Innenseite die Gleitfläche bzw. Lauffläche aufweist. Zwischen Außenumfangsfläche 34 und Gleit- bzw. Lauffläche befindet sich keine Stoßstelle zweier miteinander z. B. lösbar verbundener Teilringe. Vorzugsweise ist der Außenring 23 im gesamten aus der Gestellflucht zylinderseitig herausragenden Bereich in diesem Sinne radial einstückig bzw. einteilig ausgebildet.

Die Innenumfangsfläche des Innenrings 27 und die Au ßenumfangsfläche des aufzunehmenden Zapfens 14; 16 können im Längsbereich ihres Zusammenwirkens zylindrisch ausgebildet sein, wobei in diesem Fall ein "Aufschrumpfen" und/oder Verschrauben und/oder ein Klemmen des Innenrings 27 auf den Zapfen 14; 16 mittels eines Spansatzes und/oder ein bereits durch besonders kleine Toleranzen bei der Herstellung berücksichtigter passgenauer Sitz erforderlich ist. Vorteile hat diese Ausführung hinsichtlich der Möglichkeit einer relativen axialen Ausrichtung zwischen Lager 17 und Zylinder 06; 07; 03; 04, ohne dass die Gefahr der Änderung einer voreingestellten und/oder gewünschten Lagerspannung besteht.

In der hier dargestellten Ausführung sind die Innenumfangsfläche des Innenrings 27 und die Außenumfangsfläche des aufzunehmenden Zapfens 14; 16 zueinander komplementär konisch ausgebildet und werden ggf. unter Verwendung eines Abpassrings 24 in axialer Relativposition zueinander positioniert und vorteilhaft mittels Schrauben verbunden und/oder verdrehgesichert.

Zumindest die Lagervorrichtungen 09; 11 eines von mehreren Zylindern 03; 04; 06; 07, hier z. B. die Lagervorrichtungen 11 des schwenkbaren Zylinders 06, ist in bevorzugter, jedoch nicht zwingender Ausgestaltung der Druckeinheit 01 bzw. des Doppeldruckwerks 13 mit einer Justageeinrichtung ausgebildet und ist daher für Justagezwecke zusätzlich derart, z. B. exzentrisch, in der Bohrung 18 des Seitengestells 02; 12 gelagert, dass sich bei Verdrehen des Außenrings 23 das Zentrum des das Radiallager 17 mittelbar oder unmittelbar aufnehmenden Innenquerschnitts mit zumindest einer radialen Komponente bewegt ("Justageexzenter"). Eine Exzentrizität e' kann hierbei im Bereich von 1,5 und 8 mm, insbesondere von 2 bis 5 mm, liegen. Für den Fall der mit Schwenklager 19 ausgebildeten Lagervorrichtung 11 ist dieser Justageexzenter zusätzlich zum Schwenklager 19, hier dem Schwenkexzenter, vorgesehen. Für den Fall einer ohne Schwenklager ausgebildeten Lagervorrichtung 09 stellt dies z. B. die alleinige Möglichkeit einer Bewegung der Rotationsachse R in eine Richtung mit radialer Komponente dar. Vorzugsweise ist bei einem Doppeldruckwerk 13 mit vier zusammen wirkenden Zylindern 03; 06; 04; 07 zumindest einer der Übertragungszylinder 06; 07, sowie zumindest der andere Übertragungszylinder 07; 06 oder der letzterem zugeordnete Formzylinder 03; 04 in der genannten Weise mit Justageexzenter ausgebildet. Sollte in einer Ausführung der Druckeinheit 01 ein Satellitenzylinder mit zwei Form-/Übertragungszylinderpaaren oder mit vier Form-/Übertragungszylinderpaaren zusammen wirken, so sind vorteilhaft jeweils die Übertragungszylinder mit Justageexzenter ausgebildet. Unter der bzgl. einer radialen Einbaulage wirksamen "Justageeinrichtung" ist eine von der zur radialen Druck-An/AbStellung wirksame Stelleinrichtung (Schwenklager 19 mit Antrieb) insofern sich unterscheidende Vorrichtung zu verstehen, als dass ein Stellen betriebsmäßig, ein Justieren jedoch lediglich zu Montage- oder Wartungszwecken erfolgt.

Im Vorliegenden Beispiel kann der Justageexzenter dadurch gebildet sein, dass das Zentrum des das Radiallager 17 mittelbar oder unmittelbar aufnehmenden Innenquerschnitts nicht mit dem Zentrum Z der Bohrung 18 zusammenfällt, sondern um die Exzentrizität e' beastandet ist. Dies kann beispielsweise dadurch realisiert sein, dass das Zentrum Z der kreisringförmige, mit den Wälzkörpern 41 (schwenkbare Ausführung des Lagers 19) oder 36 (nichtschwenkbare Ausführung des Lagers 17) zusammen wirkende Lauffläche auf dem Innenumfang des Außenrings 23 exzentrisch zur mit der Innenumfangsfläche 22 der Bohrung 18 zusammen wirkenden Außenumfangsfläche 21 der Lagervorrichtung 09; 11 bzw. des Außenrings 23 angeordnet ist. Beispielsweise ist entweder der Außenring 23 mit einer entsprechend variierenden Wandstärke ausgebildet oder es ist die Lauffläche entsprechend exzentrisch im Innenumfang des Außenrings 23 eingearbeitet. Die Justage kann dann z. B. bei Montage der Druckeinheit 01 oder zur späteren Korrektur dadurch vorgenommen werden, dass der Außenring 23 in der Bohrung 18 entsprechend verdreht wird. Das Verdrehen kann mit einem nicht dargestellten Hilfsmechanismus, ggf. unter Anwendung eines o. g. Öldruckes, bewerkstelligt werden.

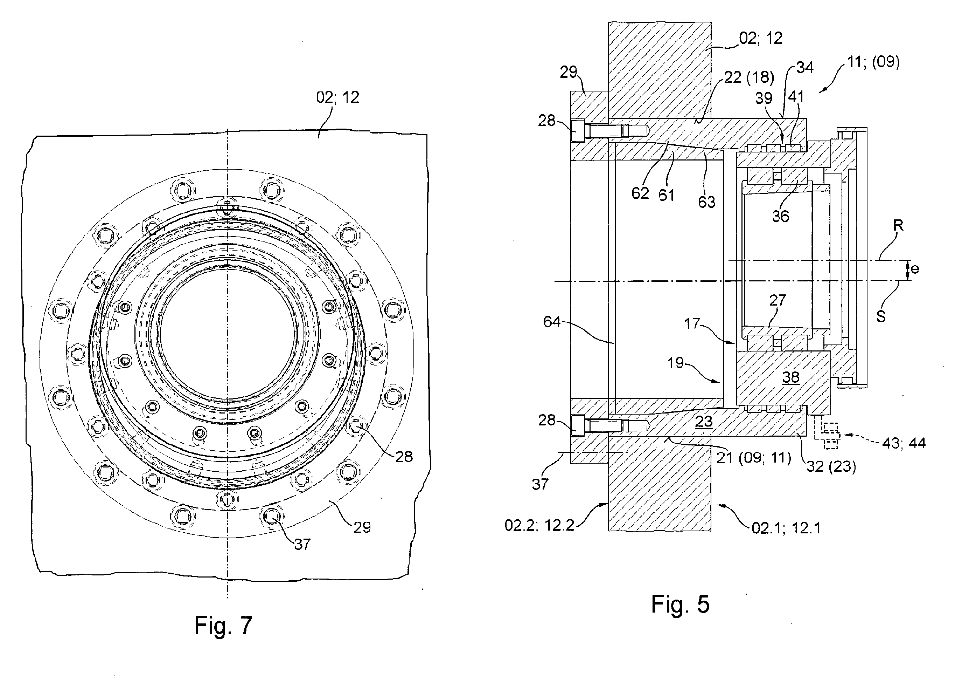

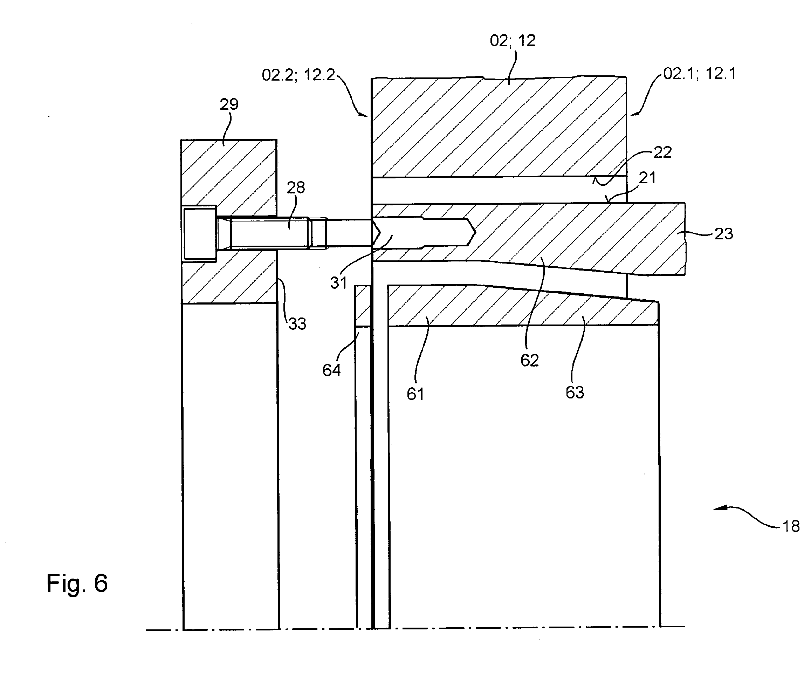

Eine durch die Figuren 5 bis 8 dargestellten Ausführung der Lagervorrichtung 09; 11 unterscheidet sich zu den oben beschriebenen Ausführungsformen lediglich dadurch, dass die Lagervorrichtung 09; 11 nicht durch thermisches Verspannen infolge von Abkühlen und Erwärmen fest in die Gestellbohrung eingefügt werden muss, sondern dadurch in der Bohrung fixiert werden kann, indem der Außenring 23 in einem Bereich der Gestellflucht mit einem Ring 61, z. B. Klemmring 61, zusammenwirkt, wobei Außenring 23 und Klemmring 61 mit einander gegenseitig zugewandten Flächen in der Art eines Spannringsatzes zusammen wirken. Grundsätzlich kann der Klemmring 61 den Lageraußenring 23 umfassen oder wie im folgenden beschrieben umgekehrt. Die zum Spannen wirksamen Flächen verlaufen hierbei geneigt zur Mittelachse des Lageraußenrings 23.

Hierbei weisen die Innenfläche des Außenrings 23 und die Außenfläche des Klemmrings 61 jeweils, insbesondere formkomplementär zueinander, einen konisch verlaufenden ringförmigen Abschnitt 62; 63 (insbesondere Ringabschnitt 62; 63) derart auf, dass eine achsparallele Relativbewegung der beiden Ringe 23; 61 (in zumindest eine relative Richtung) ein zumindest geringfügiges Aufweiten des Außenrings 23 bewirkt. Insbesondere wird dies durch eine Relativbewegung der Ringe 23; 61 in der Richtung bewirkt, durch welche die konisch verlaufenden Abschnitte 62; 63 weiter aufeinander zu und daher weiter in Deckung miteinander gebracht bzw. miteinander "verkeilt" werden. Selbstverständlich kann mit dem Aufweiten des Außenrings 23, und damit der Vergrößerung des Außendurchmessers des Außenrings 23, ein geringfügiges Verkleinern des Innendurchmessers des Klemmrings 61 einhergehen. Außen- und Klemmring 23; 61 weisen die korrespondierenden konischen Ringabschnitte 62; 63, zumindest jedoch jeweils einen zusammen wirkenden Teil dieser Ringabschnitte 62; 63, in axialer Richtung betrachtet derart auf, dass sie bzw. zumindest wirksame Teile dieser Abschnitte 62; 63 im montierten Zustand in der Gestellflucht, d. h. im Bereich zwischen einer Flucht der inneren Gestellseite 02.1; 12.1 und der Flucht der äußeren Gestellseite 02.2; 12.2 des betreffenden Seitengestells 02; 12, bzw. zumindest des unmittelbar an die Öffnung 18 angrenzenden Teils des Seitengestells 02; 12, zu liegen kommen bzw. liegen.

Die beiden Ringe 23; 61 sind je nach Anordnung durch vorzugsweise als Schrauben 28 ausgebildete Zugmittel 28 (oder als nicht dargestellte Druckmittel), insbesondere Spannschrauben in o. g. Weise aufeinander zu bzw. ineinander hinein bewegbar. Hierzu stützt sich bei der als Zugmittel 28 wirksamen Schraube 28 der Schraubenkopf mit seinem Absatz an einem gestellfesten, z. B. gestellaußenseitigen, Kragen 29 oder an einem sich seinerseits auf einer Gestellseite 02.1; 02.2; 12.1; 12.2, insbesondere der äußeren Gestellseite 02.2; 12.2, abstützenden, z. B. koaxial zur Bohrung 18 anzuordnenden Ring 29 ab, durchgreift den Kragen 29 bzw. den Ring 29 in einer Bohrung, in welcher die Schraube 28 "leer dreht", und wirkt z. B. mit einem Gewinde in einer stirnseitigen Bohrung 31 einer der Ringe 23; 61, z. B. dem Außenring 23, formschlüssig zusammen. Für den Fall eines abstützenden Rings 29 ist dieser beispielsweise lösbar, z. B. mittels Schrauben 37, mit dem Seitengestell 02; 12, insbesondere an der äußeren Gestellseite 02.2; 12.2, verbunden (siehe z. B. Fig. 7).

Das Zugmittel 28 wirkt vorzugsweise mit demjenigen Ring 23; 61 zusammen, dessen Ringwandquerschnitt sich im Bereich des konischen Ringabschnitts 62; 63 mit zunehmender Entfernung zur Schraube 28 bzw. zum abstützenden Kragen bzw. Ring 29 vergrößert. Bei der Ausbildung, z. B. der Schraube 28 oder einem anderen Mittel zur Druckausübung, mit einem Druckmittel gilt letzteres z. B. in umgekehrter Weise.

Der andere Ring 61, d. h. der von dem durch die Zugmittel 28 relativ bewegten Ring 23 verschiedene Ring 61, stützt sich z. B. auf der zur Bohrung 31 des ersten Rings 23 selben Stirnseite an einem gestellfesten Anschlag 33 mittel- oder unmittelbar gegen ein axiales Mitbewegen ab. Der Anschlag 33 kann vorzugsweise Teil des entsprechend breit ausgebildeten o. g. Kragens 29 oder Rings 29 sein. Zu Justagezwecken kann es in vorteilhafter Ausführung zweckmäßig sein, zwischen der betreffenden Stirnseite und dem gestellfesten Anschlag 33 ein Passerelement 64, z. B. einen ein- oder mehrteiligen Passerring 64 anzuordnen. Hierzu sind der Durchmesser der Bohrung 18, die Außen- und Innendurchmesser des Außenrings 23 und der Außendurchmesser des Klemmrings 61 sowie die axiale Lage der zusammen wirkenden konischen Abschnitte 62; 63 und die Länge des Klemmrings 61 derart auszulegen bzw. ausgelegt, dass zwischen Anschlag 33 und der zusammen wirkenden Stirnfläche des Klemmrings 61 im Montagezustand ein Spalt verbleibt, welcher je nach zu fordernder Vorspannung mit einem Passerring 64 definierter Stärke bestückt wird. Der axial zu bewegende Ring 23 wird dann durch die Schraube(n) 28 gegen den Kragen 29 bzw. Ring 29 herangezogen, wobei je nach Stärke des Passerrings 64 eine mehr oder weniger große Aufweitung, und eine hiervon resultierende Klemmkraft, einhergeht.

Die beiden Ringe 23; 61 sind somit Bestandteile einer das Wälzlager 17 unmittelbar oder mittelbar tragenden Halterung oder umgekehrt bildet einer der Ringe 23 der Lagervorrichtung 09; 11, insbesondere der Lageraußenring 23, einen Teil einer Halterung, welcher durch einen zusammen wirkenden Klemmring 61 in der Öffnung 18 verspannt wird. Grundsätzlich kann auch lediglich einer der beiden zusammen wirkenden Ringe 23; 61 einen keil- bzw. konusförmig verlaufenden Abschnitt 62; 63 aufweisen, welcher dann bei entsprechender Relativbewegung ein Aufweiten oder Zusammendrücken des selben und/oder des anderen Ringes 61; 23 bewirkt. Eine derartige Ausführung wäre jedoch weniger stabil gegen Kippmomente, so dass in vorteilhafter Weise zwei auf einer signifikanten Abschnittslänge, z. B. mindestens 30 mm, insbesondere mindestens 50 mm, zueinander komplementär verlaufende Umfangsflächen im wesentlichen flächig miteinander zusammen wirken.

Einer der beiden miteinander durch axiale Relativbewegung miteinander zu verspannenden Ringe 23; 61 stellt den das Radiallager 17 mittelbar oder unmittelbar aufnehmenden Lageraußenring 23 dar. Hierunter soll auch eine mehrteilige Ausführung des Lageraußenrings 23 verstanden werden, wobei dieser mehrteilige "Lageraußenring" 23 dann z. B. in axialer Richtung mehrere miteinander fest verbundene Teile aufweisen kann. Z. B. ist ein das Radiallager 17 mittelbar oder unmittelbar tragender Teil mit einem den Abschnitt 62 aufweisenden Teil (z. B. in der art einer Verlängerung) fest, jedoch ggf. lösbar, verbunden, z. B. verschraubt.

Grundsätzlich könnte der Lageraußenring 23 bzgl. der Klemmung innen liegend, d. h. vom Klemmring umfasst sein, und das Radiallager 17 sodann vom bzgl. der Klemmung innen liegenden Lageraußenring 23 im Bereich der Gestellflucht - jedoch z. B. in einem vom konischen Abschnitt 63 axial entfernten Ringabschnitt - aufgenommen sein. Zur Vermeidung von ungewünschten Spannungen im Radiallager 17 kann das Radiallager 17 in vorteilhafter Alternative jedoch gegen den Innenumfang eines zum Zylinder 03; 04; 06; 07 hin aus der Gestellflucht herausragenden Teils des entsprechend verlängerten, bzgl. der Klemmung innen liegenden Lageraußenrings 23 mittel- oder unmittelbar abgestützt sein.

In vorteilhafter und dargestellter Ausführung stützt sich das Radiallager 17 mittelbar oder unmittelbar am Innenumfang des auch in dieser Ausführung zum Zylinder 03; 04; 06; 07 hin aus der Gestellflucht herausragenden Teils 32 eines entsprechend verlängerten Außenrings 23 ab, welche im Hinblick auf die Klemmung den Klemmring 61 umfasst, d. h. bzgl. der Klemmung außen liegend angeordnet ist. Dieser aus der Gestellflucht herausragende, das Radiallager 17 mittel- oder unmittelbar abstützende Teil 32 kann wie in der ersten Ausführung ein Abschnitt eines einstückigen, entsprechend länger ausgebildeten Außenrings 23 (wie dargestellt), oder wie oben bereits erwähnt, ein Teil 32 eines z. B. in axialer Richtung mehrteiligen Außenrings 23 (d. h. fest verbundene Teile) sein.

In der Ausführung der Lagervorrichtung 09 für einen Zylinder 03; 04; 06; 07, welcher nicht in o. g. Weise stellbar gelagert sein muss bzw. ist, ist das Radiallager 17 bzw. dessen äußerer Laufring wie zum ersten Ausführungsbeispiel beschrieben direkt oder mittelbar an einem aus der Gestellflucht herausragenden Teils 32 des Außenrings 23, insbesondere direkt oder über einen Zwischenring durch den Innenumfang des aus der Gestellflucht herausragenden Teils 32 des Außenrings 23 aufgenommen und abgestützt; d. h. es liegt außerhalb der Gestellflucht auf der dem Zylinder 03; 04; 06; 07 näheren Seite des Seitengestells 02; 12. Die innere Lauffläche des Radiallagers 17 ist am Außenumfang eines Innenrings 27 vorgesehen, dessen Innenumfang den Zapfen 14; 16 aufnimmt.

Für das Vorliegen von in axialer Richtung betrachtet nebeneinander mehrerer den Zapfen 14; 16 aufnehmenden Radiallagern 17 oder einem Radiallager 17 mit mehreren axial voneinander beabstandeten umlaufenden Spuren von Wälzkörpern 36 (im dargestellten Beispiel derer zwei), ist das oben genannte ebenfalls anzuwenden.

In dieser zweiten Ausführung der Lagervorrichtung 09; 11 ist ebenfalls eine besonders steife und spielfreie Lagerung des betreffenden Zylinders 03; 04; 06; 07 geschaffen, welche einfach herstellbar und vor allem vor Ort in einfacher Weise montierbar ist. Sie ist hinsichtlich ihrer Steifigkeit selbst nach Fertigstellung noch Einstellbar und zerstörungsfrei rückzubauen. Durch die nach Innen gezogene Anordnung der bzw. des Radiallagers 17 ist wie auch in der ersten Ausführung die Verspannung im Seitengestell 02; 12 ohne Auswirkung auf die Wälzlagervorspannung möglich und zum zweiten ein Abstand des zylindernächsten Aufpunktes zur Stirnseite des Zylinders 03; 04; 06; 07 verkürzt. Zum dritten führen auch hier durch Betrieb resultierende thermisch bedingte Querschnittsänderungen des Wälzlagers 17 und ggf. wälzlagernaher Bauteile nicht zu unzulässigen Verspannungen in den Lagerelementen.

Wie bereits zum ersten Ausführungsbeispiel erläutert, ist in bevorzugter Weiterbildung der Lagervorrichtung 11 für einen Zylinder 03; 04; 06; 07, welcher in o. g. Weise stellbar gelagert sein soll bzw. ist, beispielsweise ein Übertragungszylinder 06; 07, auch hier zwischen dem Radiallager 17 bzw. zwischen dem Satz mehrerer den Zapfen 14; 16 aufnehmender Radiallager 17 oder Wälzkörperspuren und dem Seitengestell 02; 12 das die Stellbewegung ermöglichende Lagermittel 19, z. B. das Exzenterlager 19 mit wenigstens einem exzentrischen Ring 38, z. B. Zwischenring 38, insbesondere Exzenterring 38, angeordnet. Das Radiallager 17 ist (bzw. die Radiallager 17 sind) mit seiner (bzw. ihren) Rotationsachse R wieder exzentrisch (Exzentrizität e) zur Schwenkachse S des Rings 38 in letzterem angeordnet. Zur Ausführung und/oder Anordnung des Exzenterlagers 19 im Außenring 23 ist das zur ersten Ausführung genannte anzuwenden. Das selbe gilt für die optionale Anwendung eines hier nicht dargestellten Justageexzenters mit einer Exzentrizität e'. Von besonderem Vorteil ist auch hier eine Ausführung der die Stellbewegung ermöglichende Lagervorrichtung 11 derart, dass das Exzenterlager 19 bzw. dessen zylindernächster Laufring direkt oder mittelbar an einem aus der Gestellflucht herausragenden Teils 32 der des Außenrings 23 (bzw. entsprechend verlängerten mehrteiligen Außenrings), aufgenommen und abgestützt ist; d. h. es liegt ebenfalls außerhalb der Gestellflucht auf der dem Zylinder 03; 04; 06; 07 näheren Seite des Seitengestells 02; 12. In einer bevorzugten Ausführung liegen somit sowohl das Radiallager 17 als auch das Exzenterlager 19 im einem Bereich der Halterung 23, 61 außerhalb der Gestellflucht auf der zylindernäheren Seite. Das oben zur relativen Anordnung und axiale Relativlage von Radial- und Exzenterlager 17; 19 genannte ist auch hier in gleicher Weise zu übertragen.

Für die genannten Ausführungen sind die die Stellbewegung des stellbaren Zylinders 06; 07 (03; 04) ermöglichenden Lagermittel 19 zusammen mit einem die Stellbewegung bewerkstelligenden Antriebsmittel 42 jeweils Bestandteil einer Stelleinrichtung. Für die Ausführung des die Stellbewegung ermöglichenden Lagermittels 19 als Exzenterlager 19 ist für das Stellen ein Verdrehen des Exzenterringes 38 vom Antriebsmittel 42 her erforderlich. Das im Folgenden dargelegte ist für die oben genannten Ausführungen gleichermaßen anzuwenden.

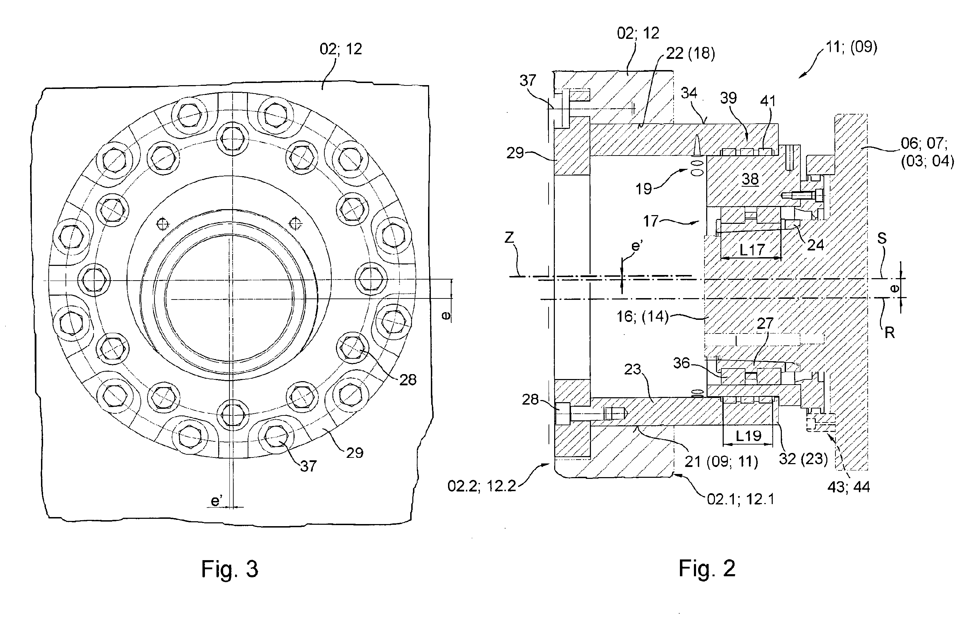

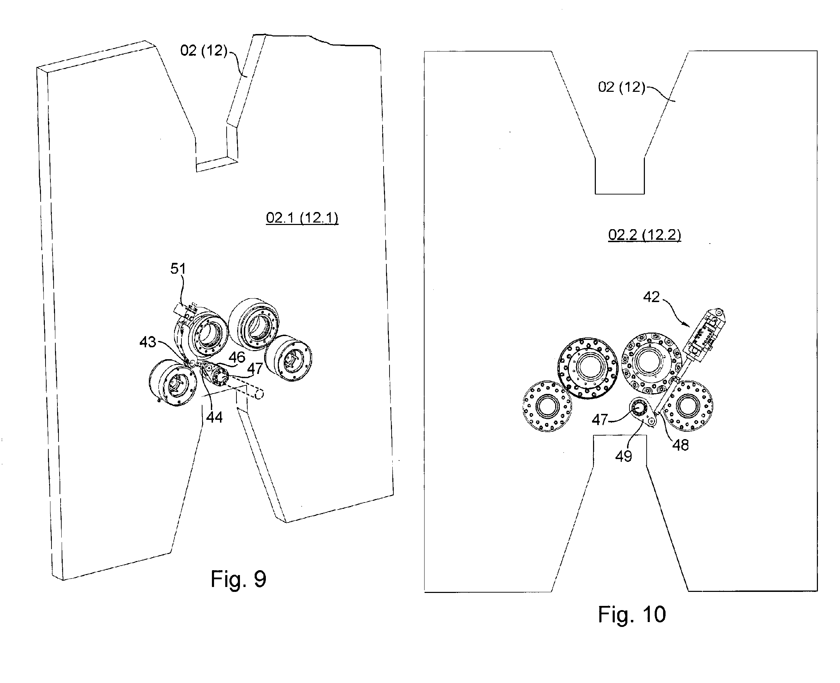

In einer vorteilhaften Ausführung ist der Exzenterring 38 über z. B. ein Gelenkt 43 (in Fig. 2 und 5 lediglich strichliert angedeutet) von einem Schub- und/oder Zugelement 44, z. B. Pleuel 44, angelenkt. Die Anlenkung erfolgt vorzugsweise auf der inneren Gesellseite 02.1; 12.1. Grundsätzlich kann das Pleuel 44 eine Verlängerung eines Kolbens oder Zylinders eines am Seitengestell 02; 12 (z. B. der Innenseite) ebenfalls gelenkig angeordneten Zylinder-Kolben-Systems (Pneumatik- oder Hydraulikzylinder) sein. Von Vorteil hinsichtlich des Bauraumes ist jedoch die dargestellt Ausführung, wobei das Pleuel 44 an seinem exzenterfernen Ende gelenkig mit einem Hebel 46 verbunden ist, welcher seinerseits über eine das Seitengestell 02; 12 zylinderparallel durchgreifende Welle 47 verschwenkbar ist (siehe z. B. Fig. 9 und 10). Als ein die Welle 47 verschwenkendes Antriebsmittel 42 kann hierbei grundsätzlich ein auf der äußeren Gestellseite 02.2; 12.2 angeordneter Antriebsmotor vorgesehen sein. In der dargestellten Ausführung ist jedoch auf der äußeren Gestellseite 02.2; 12.2 ein druckmittelbetätigbares, insbesondere pneumatik- oder hydraulikbetätigbares Zylinder-Kolben-Systems 42 vorgesehen, welches z. B. über ein Schub- und/oder Zugelement 48, z. B. Pleuel 48, gelenkig mit einem an der Welle 47 angeordneten Hebel 49, und andererseits an der äußeren Gestellseite 02.2; 12.2 gelenkig mit dem Seitengestell 02; 12 verbunden ist. Bei Beaufschlagung des Zylinder-Kolben-Systems 42 mit Druckmittel wird über das Pleuel 48 die Welle 47 verschwenkt, und deren Drehbewebung über den Hebel 46 und das Pleuel 44 als Verschwenken des Exzenterrings 38 übertragen. Um eine definierte bzw. definierbare Anstelllage des Zylinders 06; 07 gewährleisten zu können, kann in vorteilhafter Ausführung ein die Schwenkbewegung in Richtung Druck-An begrenzender Anschlag 51 vorgesehen sein. Dieser ist vorzugsweise justierbar ausgebildet. Dieser Stellantrieb kann auf beiden Stirnseiten des Zylinders 03; 04; 06; 07 spiegelbildlich, d. h. je Innenseite zumindest die Anlenkung des Exzenterrings 38 über das Gelenk 43, ein Pleuel 44, einen Hebel 46 und eine Welle 47.

In einer vorteilhaften Weiterbildung ist die Welle 47 über die lichte Weite zwischen den beiden Seitengestellen 02; 12 derart durchgehend ausgebildet, dass die beiden mit den zwei stirnseitigen Exzenterlagern 38 des selben Zylinders 06; 07 in Wirkverbindung stehenden Hebel 46 an der selben Welle 47 angreifen und dadurch eine synchrone Stellbewegung erfolgt. Hierbei kann die Welle 47 zwar beidseitig jeweils über außenwandseitige Antriebsmittel 42, z. B. jeweils in oben beschriebener Weise, angetrieben sein, jedoch ist aus Bauraum- und/oder Kostengründen eine Lösung vorteilhaft, wobei lediglich auf einer Seite I; II, insbesondere einer der Antriebsseite II (siehe unten) gegenüberliegenden Seite I, ein Antrieb der Welle 47 z. B. von der äußeren Gestellseite 12.2 her erfolgt.

Vorzugsweise ist also jedem Zylinder 03; 04; 06; 07 eines einen Übertragung- und einen Formzylinder 03; 04; 06;07 aufweisenden Druckwerks bzw. den vier Zylindern 03; 04; 06; 07 eines Doppeldruckwerks 13 eine eigene Lagervorrichtung 09; 11 - mit oder ohne An-/Abstellmechanismus - vorgesehen, welche jeweils in einer eigenen Öffnung 18 vorgesehen und verspannt ist. Zwischen den Öffnungen 18 bleiben zumindest Stege 52 des betreffenden Seitengestells 02; 12 stehen, so dass die Legervorrichtungen 09; 11 unabhängig voneinander und ohne sich zu beeinflussen für sich spielfrei verspannt werden können.

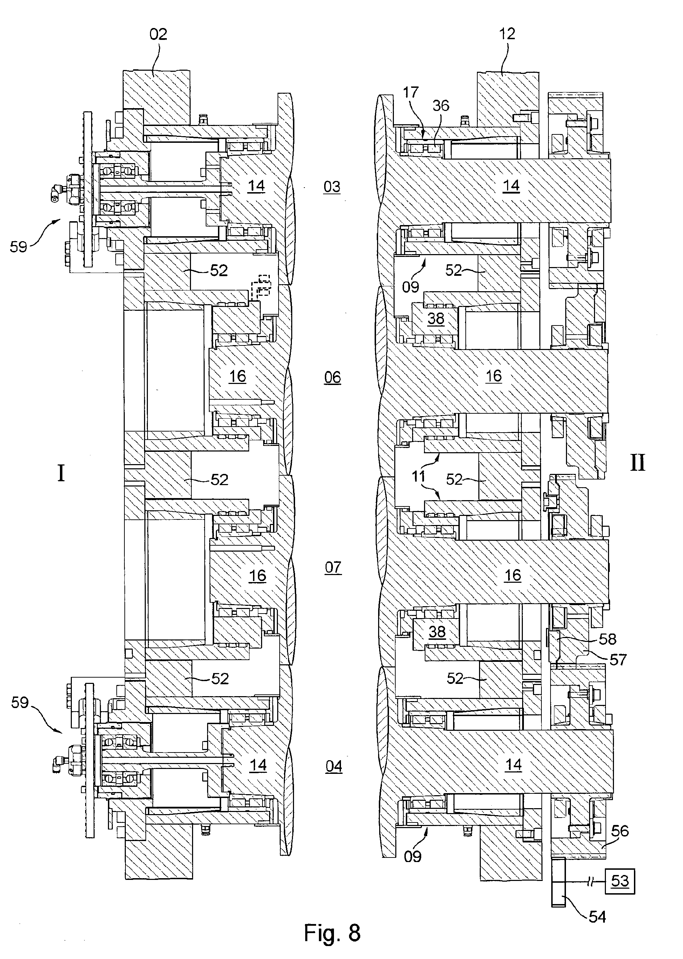

Dem Formzylinder 03; 04 sind (jeweils) stirnseitige Lagervorrichtungen 09 ohne, dem Übertragungszylinder 06; 07 (jeweils) stirnseitige Lagervorrichtung 11 mit die Stellbewegung ermöglichenden Lagermittel 19 zugeordnet (z. B. Fig. 4, 8). Auf einer Seite II, einer sog. Antriebsseite II, sind die Zylinder 03; 04; 06, 07 rotatorisch antreibbar bzw. zwangsangetrieben. Hierbei kann grundsätzlich je Zylinder 03; 04; 06; 07 ein eigener Antriebsmotor 53, oder je Doppeldruckwerk 13 ein die vier Zylinder 03; 04, 06; 07 über einen Zahnradzug antreibender Antriebsmotor 53, oder aber vorteilhaft je Paar aus Form- und Übertragungszylinder 03, 06; 04, 07 ein Antriebsmotor 53 (für den Produktionsbetrieb) vorgesehen sein (beispielhaft in Fig. 4, 8 schematisch dargestellt). Im dargestellten Ausführungsbeispiel wird vom Antriebsmotor 53 über ein Ritzel 54 auf ein mit dem Zapfen 14 des Formzylinders 03; 04 drehfest verbundenes Zahnrad 56, z. B. Stirnrad 56, getrieben, und von diesem auf ein mit dem Zapfen 16 des zugeordneten Übertragungszylinders 06; 07 verbundenes Zahnrad 57, z. B. Stirnrad 57. Hierbei kann neben dem Stirnrad 57 ein zweites Zahnrad 58, ein sog. Beiläufer 58, mit dem Zapfen 16 verbunden und gegenüber dem Stirnrad 57 z. B. geringfügig verdreht sein, durch welches ein Zahnflankenwechsel bei beispielsweise geringfügigen Lastschwankungen vermieden werden können. In einer nicht dargestellten vorteilhaften Variante der Ausführung kann vom Antriebsmotor 53 auch über ein Ritzel oder direkt axial (ggf. über eine Winkel- und/oder Versatzausgleichende Kupplung) auf den Zapfen 16 des Übertragungszylinders 07; 08 des jeweiligen Paares getrieben werden, wobei dann z. B. der Beiläufer 58 entfallen kann. Vom Formzylinder 03 kann in den genannten Varianten in einer Ausführung weiter auf ein nicht dargestelltes je Formzylinder 03; 04 zugeordnetes Farbwerk abgetrieben werden. Dieses ist beispielsweise als Walzenfarbwerk ausgeführt mit mindestens einer Farbquelle, z. B. Farbkasten, Rakelbalken oder Dosierleiste, mit mindestens einer von der Farbquelle her kommende Farbe auf mindestens einen changierbaren Reibzylinder übertragenden Farbwalze sowie mit mindestens einer vom Reibzylinder her kommende Farbe auf den Formzylinder übertragenden Auftragwalze. Hierbei ist in vorteilhafter Ausführung jedoch zumindest eine der Walzen, insbesondere zumindest ein Reibzylinder, durch einen von den Antrieben der Zylinder 03; 04; 06; 07 mechanisch unabhängigen Antriebsmotor während des Produktionsbetriebes zwangsantreibbar bzw. zwangsangetrieben. Ist das Farbwerk als Kurzfarbwerk mit mindestens einer Rakeleinrichtung, einer Rasterwalze und mindestens einer Auftragwalze ausgebildet, so ist vorzugsweise zumindest die Rasterwalze durch einen von den Antrieben der Zylinder 03; 04; 06; 07 mechanisch unabhängigen Antriebsmotor während des Produktionsbetriebes zwangsantreibbar bzw. zwangsangetrieben.

Für den Fall des Nassoffset ist je Formzylinder 03; 04 ein nicht dargestelltes Feuchtwerk mit mindestens zwei Walzen vorgesehen. Mindestens eine dieser Walzen, insbesondere eine als changierbarer Reibzylinder ausgebildete Walze ist durch einen von den Antrieben der Zylinder 03; 04; 06; 07 mechanisch unabhängigen Antriebsmotor während des Produktionsbetriebes zwangsantreibbar bzw. zwangsangetrieben.

Auf z. B. der der Antriebsseite II gegenüberliegenden Seite I ist vorteilhafter Weise je Formzylinder 03; 04 ein nicht näher beschriebener Axialantrieb 59, z. B. Seitenregisterantrieb 59, vorgesehen, mittels welchem der Formzylinder 03; 04 in seiner axialen Lage verstellbar ist. Die Radiallager 17 des Formzylinders 03; 04 sind entsprechend des gewünschten Stellweges mit einem Spiel in axialer Richtung ausgebildet, d. h. eine axiale Relativbewegung zwischen zapfenfester Lauffläche und gestellfester Lauffläche für die Wälzelemente 36 des Radiallagers 17 ermöglichend. Zur axialen Abbindung zwischen Axialantrieb und Zapfen 14 ist vorzugsweise ein Axiallager 26 vorgesehen, welches axialer Kräfte aufnimmt, jedoch eine relative Drehbewegung gestattet.

### Bezugszeichenliste

- 01: Druckeinheit, H-Druckeinheit
- 02: Seitengestell
- 03: Zylinder, Druckwerkszylinder, Formzylinder
- 04: Zylinder, Druckwerkszylinder, Formzylinder
- 05: -
- 06: Zylinder, Druckwerkszylinder, Übertragungszylinder
- 07: Zylinder, Druckwerkszylinder, Übertragungszylinder
- 08: Bedruckstoffbahn, Bahn
- 09: Lagervorrichtung
- 10: -
- 11: Lagervorrichtung
- 12: Seitengestell
- 13: Doppeldruckwerk, Brückendruckeinheit
- 14: Zapfen
- 15: -
- 16: Zapfen
- 17: Lager, Radiallager, Wälzlager
- 18: Öffnung, Bohrung
- 19: Lager, Lagermittel, Schwenklager, Exzenterlager
- 20: -
- 21: Außenumfangsfläche (09; 11)
- 22: Innenumfangsfläche (18)
- 23: Ring, Lagerring, Außenring, Lageraußenring
- 24: Abpassring
- 25: -
- 26: Axiallager
- 27: Innenring
- 28: Zugmittel, Schraube
- 29: Ring, Kragen
- 30: -
- 31: Bohrung
- 32: Teil oder Verlängerung des Außenrings (23)
- 33: Anschlag
- 34: Außenumfangsfläche (23; 32)
- 35: -
- 36: Wälzkörper
- 37: Schraube
- 38: Ring, exzentrisch, Zwischenring, Exzenterring
- 39: Lager, Wälzlager
- 40: -
- 41: Wälzkörper
- 42: Antriebsmittel, Zylinder-Kolben-System, druckmittelbetätigbar
- 43: Gelenk
- 44: Schub- und/oder Zugelement, Pleuel
- 45: -
- 46: Hebel
- 47: Welle
- 48: Schub- und/oder Zugelement, Pleuel
- 49: Hebel
- 50: -
- 51: Anschlag
- 52: Steg (02; 12)
- 53: Antriebsmotor
- 54: Ritzel
- 55: -
- 56: Zahnrad, Stirnrad
- 57: Zahnrad, Stirnrad
- 58: Zahnrad, Beiläufer
- 59: Axialantrieb, Seitenregisterantrieb
- 60: -
- 61: Ring, Klemmring
- 62: Abschnitt, Ringabschnitt (23)
- 63: Abschnitt, Ringabschnitt (23)
- 64: Passerelement, Passerring

- 02.1: Gestellseite, innen
- 02.2: Gestellseite, außen

- 12.1: Gestellseite, innen
- 12.2: Gestellseite, außen

- e: Exzentrizität
- e': Exzentrizität

- L17: Stützbereich, Längsabschnitt (17)
- L19: Stützbereich, Längsabschnitt (19)

- R: Rotationsachse
- S: Schwenkachse
- T: Transportrichtung
- Z: Zentrum (18)

- I: Seite
- II: Seite, Antriebsseite

## Patentansprüche

1. Druckeinheit (01) einer Druckmaschine mit stirnseitigen Seitengestellen (02; 12) und einer Vorrichtung zur Lagerung eines Zylinders (03; 04; 06; 07) an den Seitengestellen (02; 12) in Lagervorrichtungen (09; 11), wobei für die Lagervorrichtung (09; 11) ein Innenring (27) eines Radiallagers (17) zur Aufnahme eines Zapfens (14) des Zylinders (03; 04; 06; 07) vorgesehen ist, welcher mittelbar über ein eine Radialbewegung des Zapfens (14) ermöglichendes Lagermittel (19) in einem Außenring (23) angeordnet ist, wobei der Außenring (23) seinerseits mittelbar oder unmittelbar in einer Öffnung (18) des Seitengestells (02; 12) gelagert ist, und wobei das Radiallager (17) in axialer Richtung betrachtet in einem Bereich des Außenrings (23) angeordnet ist, welcher aus einer Gestellflucht des Seitengestells (02; 12) zur Seite des Zylinders (03; 04; 06; 07) hin herausragt, und wobei das die Radialbewegung des Zylinders (03; 04; 06; 07) ermöglichende Lagermittel (19) ebenfalls in einem aus einer Gestellflucht des Seitengestells (02; 12) zur Seite des Zylinders (03; 04; 06; 07) hin herausragenden Bereich des Außenrings (23) angeordnet ist, **dadurch gekennzeichnet, dass** die Öffnung (18) im Seitengestell (02; 12) als kreisförmige Öffnung (18) ausgebildet ist, und dass eine Justageeinrichtung vorgesehen ist, indem eine axial durch das Zentrum des das Radiallager (17) mittelbar aufnehmenden Innenumfangs des Außenrings (23) verlaufende Gerade um eine Exzentrizität (e') beabstandet zu einer axial durch das Zentrum (Z) der kreisförmigen Öffnung (18) verlaufende Gerade verläuft.

2. Druckeinheit nach Anspruch 1, **dadurch gekennzeichnet, dass** die axiale Lage des die Radialbewegung ermöglichenden Lagermittels (19) und des Radiallagers (17) derart vorgesehen sind, dass deren die radialen Kräfte aufnehmenden Stützbereiche (L17; L19) eine selbe senkrecht zur axialen Richtung des Radiallagers (17) stehende Ebene schneiden.

3. Druckeinheit nach Anspruch 1, **dadurch gekennzeichnet, dass** das die Radialbewegung des Zapfens (14) ermöglichendes Lagermittel (19) einen zwischen Außenring (23) und Radiallager (17) angeordneten Ring (38) umfasst, zu dessen Außenumfang das Radiallager (17) exzentrisch angeordnet ist.

4. Druckeinheit nach Anspruch 1, **dadurch gekennzeichnet, dass** der Außenring (23) zumindest auf einem Abschnitt, welcher dem Längsabschnitt (L17; L19) des dem Außenring (23) aus seiner Innenseite zugeordneten Stützbereichs (L17; L19) entspricht, in radialer Richtung einteilig ausgebildet ist.

5. Druckeinheit einer Druckmaschine mit stirnseitigen Seitengestellen (02; 12) und einer Vorrichtung zur Lagerung von Zylindern (03; 04; 06; 07) einer Druckmaschine in einem Seitengestell (02; 12) mit mindestens vier direkt oder indirekt miteinander zusammen wirkende Zylindern (03; 04; 06; 07), nämlich zwei Übertragungszylindern (06; 07) und je einen mit dem Übertragungszylinder (06; 07) in Druck-An zusammen wirkenden Formzylinder (03; 04), wobei stirnseitig jeden Zylinders (03; 04; 06; 07) eines Druckwerks der Druckeinheit (01) eine Lagervorrichtung (09; 11) mit einem Lageraußenring (23) vorgesehen ist, welcher mittelbar oder unmittelbar ein Radiallager (17) aufnimmt, wobei das Radiallager (17) mittelbar oder unmittelbar in einem Bereich des Lageraußenrings (23) angeordnet ist, welcher aus einer Gestellflucht des Seitengestells (02; 12) zur Seite des Zylinders (03; 04; 06; 07) hin herausragt, und wobei die stirnseitigen Lagervorrichtungen (11) wenigstens eines ersten der beiden Übertragungszylinder (06; 07) eine radiale Stellbewegung des Zylinders (03; 04; 06; 07) ermöglichende Lagermittel (19) aufweist, welche in axialer Richtung betrachtet ebenfalls in einem Bereich des Lageraußenrings (23) angeordnet ist, welcher aus einer Gestellflucht des Seitengestells (02; 12) zur Seite des Zylinders (03; 04; 06; 07) hin herausragt, **dadurch gekennzeichnet, dass** die Lagervorrichtungen (09; 11) jeweils in einer allein der Lagervorrichtung (09; 11) des zugeordneten Zylinders (03; 04; 06; 07) zugeordneten, kreisförmigen Öffnung (18) des Seitengestells (02; 12) gelagert ist.

6. Druckeinheit nach Anspruch 5, **dadurch gekennzeichnet, dass** die wenigstens einem der Zylinder (03; 04; 06; 07) zugeordneten Lagervorrichtungen (09; 11) eine bzgl. einer radialen Einbaulage wirksame Justageeinrichtung aufweisen.

7. Druckeinheit nach Anspruch 5, **dadurch gekennzeichnet, dass** zumindest der erste der beiden Übertragungszylinder (06; 07) beidseitig im Seitengestell (02; 12) mittels einer Vorrichtung gemäß einem oder mehreren der Ansprüche 1 bis 4 gelagert ist.

8. Druckeinheit nach Anspruch 5, **dadurch gekennzeichnet, dass** die beiden Übertragungszylinder (06; 07) in Druck-An zusammenwirkend angeordnet sind, und die Lagervorrichtungen (11) beider Übertragungszylinder (06; 07) eine Justageeinrichtung gemäß Anspruch 1 aufweisen.

9. Druckeinheit nach Anspruch 5, **dadurch gekennzeichnet, dass** die beiden Übertragungszylinder (06; 07) in Druck-An zusammenwirkend angeordnet sind, wobei die Lagervorrichtung (11) des ersten Übertragungszylinders (06) eine Justageeinrichtung gemäß Anspruch 1 aufweist, und die Lagervorrichtung (11) des dem zweiten Übertragungszylinder (07) zugeordneten Formzylinders (03; 04) eine Justageeinrichtung aufweist, indem eine axial durch das Zentrum des das Radiallager (17) aufnehmenden Innenumfangs des Außenrings (23) verlaufende Gerade um eine Exzentrizität (e') beabstandet zu einer axial durch das Zentrum (Z) der Öffnung (18) verlaufende Gerade verläuft.

10. Druckeinheit nach Anspruch 5, **dadurch gekennzeichnet, dass** die beiden Übertragungszylinder (06; 07) in Druck-An mit einem gemeinsamen Gegendruckzylinder zusammenwirkend angeordnet sind, und die Lagervorrichtungen (11) beider Übertragungszylinder (06; 07) eine Justageeinrichtung gemäß Anspruch 1 und/oder eine radiale Stellbewegung des Zylinders (03; 04; 06; 07) ermöglichende Lagermittel (19) aufweisen.

11. Druckeinheit nach Anspruch 5, **dadurch gekennzeichnet, dass** sämtliche, insbesondere vier Zylinder (03; 04; 06; 07) eines Doppeldruckwerks (13) oder sämtliche Zylinder (03; 04; 06; 07) einer Druckeinheit (01) jeweils stirnseitig eine Lagervorrichtung (09; 11) aufweisen, deren Radiallager (17) in axialer Richtung betrachtet in einem Bereich des Außenrings (23) angeordnet ist, welcher aus einer Gestellflucht des Seitengestells (02; 12) zur Seite des Zylinders (03; 04; 06; 07) hin herausragt.

12. Druckeinheit nach Anspruch 1 oder 5, **dadurch gekennzeichnet, dass** ein Exzenterring (38) des als Exzentereinrichtung (19) ausgebildeten Lagermittels (19) auf der inneren Gestellseite (02.1) zu dessen Verstellung angelenkt ist.

13. Druckeinheit nach Anspruch 12, **dadurch gekennzeichnet, dass** ein Antriebsmittel (42) zur Verstellung des Exzenterrings (38) auf Seiten der äußeren Gestellseite (02.2) angeordnet ist und über ein oder mehrere das Seitengestell (02) durchgreifende Übertragungsglieder auf den Exzenterring (38) wirkt.

14. Druckeinheit nach Anspruch 5, **dadurch gekennzeichnet, dass** für ein Doppeldruckwerk (13) aus zwei Form- und zwei Übertragungszylindern (03; 04; 06; 07) ein gemeinsamer, oder je Paar aus einem als Formzylinder (03; 04) und einem Übertragungszylinder (06; 07) mindestens ein von den übrigen Zylindern der Druckeinheit (01) mechanisch unabhängiger Antriebsmotor (53) vorgesehen ist.

15. Druckeinheit nach Anspruch 14, **dadurch gekennzeichnet, dass** für jeden Form- und Übertragungszylinder (03; 04; 06; 07) ein eigener, voneinander und von den übrigen Zylindern der Druckeinheit (01) mechanisch unabhängiger Antriebsmotor (53) vorgesehen ist.

16. Druckeinheit nach Anspruch 1 oder 5, **dadurch gekennzeichnet, dass** zur Fixierung des Außenrings (23) ein sich auf der äußeren Gestellseite (02.2; 12.2) abstützender Ring (29) in der Art eines Kragens (29) vorgesehen ist, welcher mit dem Außenring (23) einteilig hergestellt oder mit dem Außenring (23) stoffschlüssig verbunden oder mit dem Außenring (23) durch Schrauben (28) verbunden ist, wobei dieser Ring (29) lösbar mit dem Seitengestell (02; 12) verbunden bzw. verbindbar ist.

## Claims

1. Printing unit (01) of a printing press having front end side frames (02; 12) and an arrangement for the support of a cylinder (03; 04; 06; 07) on the side frames (02; 12) in bearing arrangements (09; 11), an inner ring (27), which is arranged in an outer ring (23) indirectly above a bearing means (19) making possible a radial movement of the journal (14) of a radial bearing (17) for the acceptance of a journal (14) of the cylinder (03; 04; 06; 07), being provided for the bearing arrangement (09; 11), the outer ring (23) for its part being supported indirectly or directly in an opening (18) of the side frame (02; 12), and the radial bearing (17), considered in the axial direction, being arranged in a region of the outer ring (23) which projects from a frame alignment of the side frame (02; 12) on the side of the cylinder (03; 04; 06; 07), and the bearing means (19) making possible the radial movement of the cylinder (03; 04; 06; 07) likewise being arranged in a region of the outer ring (23) projecting from a frame alignment of the side frame (02; 12) on the side of the cylinder (03; 04; 06; 07), **characterized in that** the opening (18) in the side frame (02; 12) is designed as a circular opening (18), and **in that** an adjusting device is provided by spacing a straight line running axially through the centre of the inner circumference of the outer ring (23) indirectly accepting the radial bearing (17) by an eccentricity (e') to a straight line running axially through the centre (Z) of the circular opening (18).

2. Printing unit according to Claim 1, **characterized in that** the axial position of the bearing means (19) and of the radial bearing (17) making possible the radial movement are planned such that their support regions (L17; L19) accepting the radial forces intersect a plane itself standing perpendicular to the axial direction of the radial bearing (17).

3. Printing unit according to Claim 1, **characterized in that** bearing means (19) making possible the radial movement of the journal (14) comprise a ring (38) arranged between outer ring (23) and radial bearing (17), on the outer circumference of which the radial bearing (17) is arranged eccentrically.

4. Printing unit according to Claim 1, **characterized in that** the outer ring (23) is designed integrally in a radial direction at least on a section which corresponds to the longitudinal section (L17; L19) of the support region (L17; L19) assigned to the outer ring (23) from its inner side.

5. Printing unit of a printing press having front end side frames (02; 12) and an apparatus for the support of cylinders (03; 04; 06; 07) of a printing press in a side frame (02; 12) having at least four cylinders (03; 04; 06; 07) cooperating directly or indirectly with one another, namely two transfer cylinders (06; 07) and one forme cylinder (03; 04) each cooperating in print-on with the transfer cylinder (06; 07), on the front side of each cylinder (03; 04; 06; 07) of a printing couple of the printing unit (01) a bearing arrangement (09; 11) having a bearing outer ring (23) being provided, which indirectly or directly accepts a radial bearing (17), the radial bearing (17) being arranged indirectly or directly in a region of the bearing outer ring (23) which projects from an alignment of the side frame (02; 12) on the side of the cylinder (03; 04; 06; 07), and the front end bearing arrangements (11) at least of a first of the two transfer cylinders (06; 07) having a bearing means (19) making possible a radial position movement of the cylinder (03; 04; 06; 07) which, considered in the axial direction, is likewise arranged in a region of the bearing outer ring (23) which projects from an alignment of the side frame (02; 12) on the side of the cylinder (03; 04; 06; 07), **characterized in that** the bearing arrangements (09; 11) are in each case supported in a circular opening (18) of the side frame (02; 12) solely assigned to the bearing arrangement (09; 11) of the assigned cylinder (03; 04; 06; 07).

6. Printing unit according to Claim 5, **characterized in that** the bearing arrangements (09; 11) assigned at least to one of the cylinders (03; 04; 06; 07) have an adjusting device effective with respect to a radial mounting position.

7. Printing unit according to Claim 5, **characterized in that** at least the first of the two transfer cylinders (06; 07) is supported on both sides in the side frame (02; 12) by means of an arrangement according to one or more of Claims 1 to 4.

8. Printing unit according to Claim 5, **characterized in that** the two transfer cylinders (06; 07) are arranged cooperating in print-on, and the bearing arrangements (11) of both transfer cylinders (06; 07) have an adjusting device according to Claim 1.

9. Printing unit according to Claim 5, **characterized in that** the two transfer cylinders (06; 07) are arranged cooperating in print-on, the bearing arrangement (11) of the first transfer cylinder (06) having an adjusting device according to Claim 1, and the bearing arrangement (11) of the forme cylinder (03; 04) assigned to the second transfer cylinder (07) having an adjusting device by spacing a straight line running axially through the centre of the inner circumference of the outer ring (23) accepting the radial bearing (17) by an eccentricity (e') to a straight line running axially through the centre (Z) of the opening (18).

10. Printing unit according to Claim 5, **characterized in that** the two transfer cylinders (06; 07) are arranged cooperating in print-on with a common counter-pressure cylinder, and the bearing arrangements (11) of both transfer cylinders (06; 07) have an adjusting device according to Claim 1 and/or bearing means (19) making possible a radial position movement of the cylinder (03; 04; 06; 07).

11. Printing unit according to Claim 5, **characterized in that** all, in particular four, cylinders (03; 04; 06; 07) of a double printing couple (13) or all cylinders (03; 04; 06; 07) of a printing unit (01) in each case have a bearing arrangement (09; 11) on the front side, the radial bearing (17) of which, considered in the axial direction, is arranged in a region of the outer ring (23) which projects from an alignment of the side frame (02; 12) on the side of the cylinder (03; 04; 06; 07).

12. Printing unit according to Claim 1 or 5, **characterized in that** an eccentric ring (38) of the bearing means (19) designed as an eccentric device (19) is linked for its adjustment to the inner frame side (02.1).

13. Printing unit according to Claim 12, **characterized in that** a drive means (42) for the adjustment of the eccentric ring (38) is arranged on sides of the outer frame side (02.2) and acts on the eccentric ring (38) by means of one or more transfer members reaching through the side frame (02).

14. Printing unit according to Claim 5, **characterized in that**, for a double printing couple (13) consisting of two forme cylinders and two transfer cylinders (03; 04; 06; 07), a common drive motor (53), or each pair consisting of a forme cylinder (03; 04) and a transfer cylinder (06; 07), at least one drive motor (53) mechanically independent of the other cylinders of the printing unit (01) is provided.

15. Printing unit according to Claim 14, **characterized in that**, for each forme cylinder and transfer cylinder (03; 04; 06; 07), an individual drive motor (53) mechanically independent of each other drive motor and of the other cylinders of the printing unit (01) is provided.

16. Printing unit according to Claim 1 or 5, **characterized in that**, for the fixing of the outer ring (23), a ring (29) in the style of a collar (29) supporting itself on the outer frame side (02.2; 12.2) is provided, which is produced as one part with the outer ring (23) or is connected firmly to the outer ring (23) or is connected to the outer ring (23) by screws (28), this ring (29) being connected or connectable detachably to the side frame (02; 12).

## Revendications

1. Unité d'impression (01) d'une machine à imprimer avec des bâtis latéraux (02 ; 12) frontaux et un dispositif de support d'un cylindre (03 ; 04 ; 06 ; 07) sur les bâtis latéraux (02 ; 12) dans des dispositifs de palier (09 ; 11), une bague intérieure (27) d'un palier radial (17) étant prévue pour le dispositif de palier (09 ; 11), pour le logement d'un tourillon (14) du cylindre (03 ; 04 ; 06 ; 07), lequel est disposé dans une bague extérieure (23), indirectement par l'intermédiaire d'un moyen de support (19) permettant un déplacement radial du tourillon (14), la bague extérieure (23) étant quant à elle montée directement ou indirectement dans une ouverture (18) du bâti latéral (02 ; 12), et le palier radial (17), vu en direction axiale, étant disposé dans une zone de la bague extérieure (23) qui dépasse d'un alignement du bâti latéral (02 ; 12) sur le côté du cylindre (03 ; 04 ; 06 ; 07), et le moyen de support (19) permettant le déplacement axial du cylindre (03 ; 04 ; 06 ; 07) étant également disposé dans une zone de la bague extérieure (23) qui dépasse d'un alignement du bâti latéral (02 ; 12) sur le côté du cylindre(03 ; 04 ; 06 ; 07), **caractérisée en ce que** l'ouverture (18) dans le bâti latéral (02 ; 12) est réalisée comme ouverture circulaire (18), et **en ce qu'**un dispositif de réglage est prévu, une droite à extension axiale passant par le centre de la périphérie intérieure de la bague extérieure (23) recevant indirectement le palier radial (17) étant espacée d'une excentricité (e') par rapport à une droite à extension axiale passant par le centre (Z) de l'ouverture circulaire (18).

2. Unité d'impression selon la revendication 1, **caractérisée en ce que** les positions axiales du moyen de support (19) permettant le déplacement axial et du palier radial (17) sont prévues pour que leurs zones d'appui (L17 ; L19) recevant les efforts radiaux coupent un même plan perpendiculaire à la direction axiale du palier radial (17).

3. Unité d'impression selon la revendication 1, **caractérisée en ce que** le moyen de support (19) permettant le déplacement axial du tourillon (14) comprend une bague (38) disposée entre la bague extérieure (23) et le palier radial (17), sur la périphérie extérieure de laquelle le palier radial (17) est excentriquement disposé.

4. Unité d'impression selon la revendication 1, **caractérisée en ce que** bague extérieure (23) est réalisée d'une seule pièce en direction radiale, au moins sur une partie correspondant à la longueur (L17 ; L19) de la zone d'appui (L17 ; L19) associée à la bague extérieure (23) sur sa face intérieure.

5. Unité d'impression d'une machine à imprimer avec des bâtis latéraux (02 ; 12) frontaux et un dispositif de support d'un cylindre (03 ; 04 ; 06 ; 07) d'une machine à imprimer dans un bâti latéral (02 ; 12) avec au moins quatre cylindres (03 ; 04 ; 06 ; 07) coopérant directement ou indirectement ensemble, en l'occurrence deux cylindres de transfert (06 ; 07) et un cylindre porte-cliché (03 ; 04) coopérant avec chaque cylindre de transfert (06 ; 07) en position d'application de pression, un dispositif de palier (09 ; 11) avec une bague extérieure (23) de palier étant prévu frontalement pour chaque cylindre (03 ; 04 ; 06 ; 07) d'un groupe d'impression de l'unité d'impression (01), lequel reçoit directement ou indirectement un palier radial (17), le palier radial (17) étant directement ou indirectement disposé dans une zone de la bague extérieure (23) qui dépasse d'un alignement du bâti latéral (02 ; 12) sur le côté du cylindre (03 ; 04 ; 06 ; 07), et le dispositif de palier frontal (11) d'au moins un premier des deux cylindres de transfert (06 ; 07) présentant un moyen de support (19) permettant un déplacement radial de réglage du cylindre (03 ; 04 ; 06 ; 07), et qui vu en direction axiale, est également disposé dans une zone de la bague extérieure (23) de palier dépassant d'un alignement du bâti latéral (02 ; 12) sur le côté du cylindre (03 ; 04 ; 06 ; 07), **caractérisée en ce que** les dispositifs de palier (09 ; 11) sont montés chacun dans une ouverture (18) circulaire du bâti latéral (02 ; 12) associée exclusivement au dispositif de palier (09 ; 11) du cylindre (03 ; 04 ; 06 ; 07) correspondant.

6. Unité d'impression selon la revendication 5, **caractérisée en ce que** les dispositifs de palier (09 ; 11) associés à au moins un des cylindres (03 ; 04 ; 06 ; 07) comportent un dispositif de réglage agissant sur une position de montage radial.

7. Unité d'impression selon la revendication 5, **caractérisée en ce qu'**au moins le premier des deux cylindres de transfert (06 ; 07) est monté de part et d'autre dans le bâti latéral (02 ; 12) au moyen d'un dispositif selon une ou plusieurs des revendications 1 à 4.

8. Unité d'impression selon la revendication 5, **caractérisée en ce que** les deux cylindres de transfert (06 ; 07) sont disposés de manière à coopérer en position d'application de pression, et **en ce que** les dispositifs de palier (11) des deux cylindres de transfert (06 ; 07) comportent un dispositif de réglage selon la revendication 1.

9. Unité d'impression selon la revendication 5, **caractérisée en ce que** les deux cylindres de transfert (06 ; 07) sont disposés de manière à coopérer en position d'application de pression, le dispositif de palier (11) du premier cylindre de transfert (06) comportant un dispositif de réglage selon la revendication 1, et le dispositif de palier (11) du cylindre porte-cliché (03 ; 04) associé au cylindre de transfert (07) comportant un dispositif de réglage, une droite à extension axiale passant par le centre de la périphérie intérieure de la bague extérieure (23) recevant le palier radial (17) étant espacée d'une excentricité (e') par rapport à une droite à extension axiale passant par le centre (Z) de l'ouverture (18).

10. Unité d'impression selon la revendication 5, **caractérisée en ce que** les deux cylindres de transfert (06 ; 07) sont disposés de manière à coopérer avec un cylindre de contre-pression commun en position d'application de pression, et **en ce que** les dispositifs de palier (11) des deux cylindres de transfert (06 ; 07) comportent un dispositif de réglage selon la revendication 1 et/ou un moyen de support (19) permettant un déplacement radial de réglage du cylindre (03 ; 04 ; 06 ; 07).

11. Unité d'impression selon la revendication 5, **caractérisée en ce que** tous les cylindres, en particulier les quatre cylindres (03 ; 04 ; 06 ; 07) d'un groupe d'impression double (13) ou tous les cylindres (03 ; 04 ; 06 ; 07) d'une unité d'impression (01) présentent chacun frontalement un dispositif de palier (09 ; 11), dont le palier radial (17), vu en direction axiale, est disposé dans une zone de la bague extérieure (23) qui dépasse d'un alignement du bâti latéral (02 ; 12) sur le côté du cylindre (03 ; 04 ; 06 ; 07).

12. Unité d'impression selon la revendication 1 ou la revendication 5, **caractérisée en ce qu'**une bague excentrique (38) du moyen de support (19) réalisé comme dispositif à excentrique (19) est articulée sur le côté de bâti intérieur (02.1) pour le réglage de celui-ci.

13. Unité d'impression selon la revendication 12, **caractérisée en ce qu'**un moyen d'entraînement (42) pour le réglage de la bague excentrique (38) est disposé sur le côté de bâti extérieur (02.2) et agit sur la bague excentrique (38) par un ou plusieurs organes de transmission traversant le bâti latéral (02).

14. Unité d'impression selon la revendication 5, **caractérisée en ce que** pour un groupe d'impression double (13) composé de deux cylindres porte-cliché et deux cylindres de transfert (03 ; 04 ; 06 ; 07), il est prévu un moteur d'entraînement (53) commun, ou au moins un moteur d'entraînement (53) mécaniquement indépendant des autres cylindres de l'unité d'impression (01) par paire composée d'un cylindre porte-cliché (03 ; 04) et d'un cylindre de transfert (06 ; 07).

15. Unité d'impression selon la revendication 14, **caractérisée en ce que** pour chaque cylindre porte-cliché et cylindre de transfert (03 ; 04 ; 06 ; 07), il est prévu un moteur d'entraînement (53) propre, mécaniquement indépendant des autres moteurs d'entraînement et des autres cylindres de l'unité d'impression (01).

16. Unité d'impression selon la revendication 1 ou la revendication 5, **caractérisée en ce que**, pour la fixation de la bague extérieure (23), une bague (29) prenant appui sur le côté de bâti extérieur (02.2 ; 12.2) est prévue à la façon d'une collerette (29), laquelle est fabriquée d'une seule pièce avec la bague extérieure (23), ou est raccordée par liaison de matière à la bague extérieure (23), ou est raccordée par des vis (28) à la bague extérieure (23), ladite bague (29) étant raccordée ou pouvant être raccordée au bâti latéral (02 ; 12) de manière amovible.
